# EUROPEAN PATENT SPECIFICATION

(11) **EP 3 539 087 B1**
(45) Date of publication and mention of the grant of the patent: **02.11.2022**
(21) Application number: 17868922.0
(22) Date of filing: 14.11.2017
(51) Int. Cl.: G06T 19/00, G02B 27/01, G06F 3/01, G06T 15/00, G06T 15/20, G06F 3/0487, G06F 1/16, G06F 3/042, G06F 3/147, G06F 9/451, G09G 5/00, G09G 5/14

(54) **A SYSTEM FOR IMPORTING USER INTERFACE DEVICES INTO VIRTUAL/AUGMENTED REALITY**
SYSTEM ZUM IMPORTIEREN VON BENUTZERSCHNITTSTELLENVORRICHTUNGEN IN EINE VIRTUELLE/ERWEITERTE REALITÄT
SYSTÈME D'IMPORTATION DE DISPOSITIFS D'INTERFACE UTILISATEUR DANS UNE RÉALITÉ VIRTUELLE/AUGMENTÉE

(30) Priority: 14.11.2016 US 201662421910 P
(43) Date of publication of application: 18.09.2019
(60) Divisional application: 19187087.2
(73) Proprietor: Logitech Europe S.A., 1015 Lausanne (CH)
(72) Inventor: HARVEY, Stephen, 1015 Lausanne (CH); O'KEEFFE, Denis, 1015 Lausanne (CH); KEHOE, Aidan, 1015 Lausanne (CH); GUTIERREZ, Mario, 1015 Lausanne (CH); O'SULLIVAN, Damien, 1015 Lausanne (CH); ROUVINEZ, Thomas, 1015 Lausanne (CH); MEISSER, Mathieu, 1015 Lausanne (CH); CURRAN, Noirin, 1015 Lausanne (CH); ZIMMERMANN, Remy, 1015 Lausanne (CH); TWOHIG, Marcel, 1015 (CH); ONORIO, Dennin, 1015 Lausanne (CH); O'BRADAIGH, Pierce, 1015 Lausanne (CH); RIVIERE, Olivier, 1015 Lausanne (CH); TROTMAN, Ciaran, 1015 Lausanne (CH); CONNELLAN, Andreas, 1015 Lausanne (CH); MURPHY, Padraig, 1015 Lausanne (CH); AHERN, Jerry, Lausanne 1015 (CH)
(74) Representative: Hofstetter, Schurack & Partner
(86) International application number: PCT/US2017/061649
(87) International publication number: WO 2018/090060

(56) References cited:
- WO-A1-2015/096145
- WO-A1-2016/041088
- US-A1- 2010 103 103
- US-A1- 2013 342 564
- US-A1- 2014 306 866
- US-A1- 2014 306 866
- US-A1- 2016 054 791
- US-A1- 2016 209 658
- US-A1- 2016 253 842

## Description

### TECHNICAL FIELD

The present disclosure relates generally to virtual reality systems and in particular to providing user input devices and other peripherals in a virtual reality environment.

### BACKGROUND

Virtual, mixed, or augmented reality can be associated with a variety of applications that comprise immersive, highly visual, computer-simulated environments. These environments can simulate a physical presence of a user in a real or imagined world. The computer simulation of these environments can include computer rendered images, which can be presented by means of a graphical display. The display can be arranged as a head mounted display (HMD) that may encompass all or part of a user's field of view.

A user can interface with the computer-simulated environment by means of a user interface device or peripheral device, examples of which include a keyboard, game controller, joystick, mouse, stylus, speaker, and steering wheel. When immersed in the computer-simulated environment, the user may perform complex operations associated with the interface device, including actuation of one or more keys or other input elements of the interface device. However, there is need for improvement when operating within virtualized environments using physical interface devices, especially when performing productivity-based tasks.

US 2016 054791 A1 describes a system and method for navigating augmented reality content with a watch.

### SUMMARY

The invention is set out in the appended set of claims.

### BRIEF DESCRIPTION OF THE FIGURES

Aspects, features and advantages of embodiments of the present disclosure will become apparent from the following description of embodiments in reference to the appended drawings in which like numerals denote like elements.
Figure 1A is a block system diagram showing comparative example of a virtual reality environment system.
Figure 1B illustrates a particular embodiment of a virtual reality system with a sensor and tracking system.
Figure 1C illustrates a particular embodiment of the view of a virtual reality environment through an HMD.
Figure 1D illustrates a particular embodiment of a virtual reality environment with multiple virtual displays.
Figure 1E is a high level diagram of an embodiment of an augmentation and tracking system operation.
Figure 2 is a block diagram showing an embodiment of a networked system for providing content to the virtual reality environment system of figure 1A.
Figure 3 is a block system diagram showing an embodiment implementation of a computer of the virtual reality environment system of figure 1A.
Figure 4 is a block system diagram showing an embodiment implementation of a user interface device of the virtual reality environment system of figure 1A.
Figure 5 is a plan view showing an embodiment of a user interface device of the virtual reality environment system of figure 1A.
Figure 6 is a schematic diagram showing an embodiment graphical environment to represent the user interface device of figure 5.
Figure 7 and 7A include a schematic diagram showing an embodiment graphical environment to represent the user interface device of figure 5.
Figure 8 is a perspective view showing an embodiment of a user interface device of the virtual reality environment system of figure 1A.
Figure 9 is a flow chart showing an embodiment process for interfacing a user with a computer of the virtual reality environment system of figure 1A.
Figure 10 is a schematic diagram showing an embodiment of a user interface device of the virtual reality environment system of figure 1A.
Figure 11 is a flow chart showing an embodiment process for interfacing a user with a computer of the virtual reality environment system of figure 1A.
Figure 12 is a plan view of an embodiment of a user interface device of the virtual reality environment system of figure 1A.
Figure 13 is an exploded diagram showing an embodiment representation of the user interface device of figure 12 for a graphical environment generated by the system of figure 1A.
Figure 14 is a schematic diagram showing an embodiment graphical environment to represent the user interface device of figure 12.
Figure 15 is a schematic diagram showing an embodiment graphical environment to represent the user interface device of figure 12.
Figure 16 is a schematic diagram showing an embodiment graphical environment to represent the user interface device of figure 12.
Figure 17 is a flow chart showing an embodiment process for interfacing a user with a computer of the virtual reality environment system of figure 1A.
Figure 18 shows a simplified diagram of a peripheral-centric augmented workstation environment (AWE), according to certain embodiments.
Figure 19 shows an example of an augmented workstation environment, according to certain embodiments.
Figure 20 shows how content zones may track with respect to a reference peripheral, according to certain embodiments.
Figure 21 shows how content zones may collapse and expand, according to certain embodiments.
Figure 22 is a simplified flow chart showing aspects of a method for operating an augmented workstation environment, according to certain embodiments.
Figure 23 is a simplified flow chart showing aspects of a method for operating a peripheral device *(e.g.,* reference peripheral) in an augmented workstation environment, according to certain embodiments.
Figure 24 shows a simplified diagram of a hub-centric augmented workstation environment (AWE), according to certain embodiments of the invention.
Figure 25 is a simplified flow chart showing aspects of a method for operating a hub to interact with one or more peripheral devices within an AR/VR workstation environment, according to certain embodiments of the invention.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular devices, structures, architectures, interfaces, techniques, etc. in order to provide a thorough understanding of the various aspects of the present disclosure. However, it will be apparent to those skilled in the art having the benefit of the present disclosure that the various aspects of the claims may be practiced in other examples that depart from these specific details. In certain instances, descriptions of well-known devices, circuits, and methods are omitted so as not to obscure the description of the present disclosure with unnecessary detail.

### Definitions

The present disclosure may be better understood in view of the following explanations:

As used herein, the terms "computer simulation" and "virtual reality environment" may refer to a virtual reality, augmented reality, mixed reality, or other form of visual, immersive computer-simulated environment provided to a user. As used herein, the terms "virtual reality" or "VR" may include a computer-simulated environment that replicates an imaginary setting. A physical presence of a user in this environment may be simulated by enabling the user to interact with the setting and any objects depicted therein. Examples of VR environments may include: a video game; a medical procedure simulation program including a surgical or physiotherapy procedure; an interactive digital mock-up of a designed feature, including a computer aided design; an educational simulation program, including an E-leaning simulation; or other like simulation. The simulated environment may be two or three-dimensional. As used herein, the terms "augmented reality" or "AR" may include the use of rendered images presented in conjunction with a real-world view. Examples of AR environments may include: architectural applications for visualization of buildings in the real-world; medical applications for augmenting additional information to a user during surgery or therapy; gaming environments to provide a user with an augmented simulation of the real-world prior to entering a VR environment. As used herein, the terms "mixed reality" or "MR" may include use of virtual objects that are rendered as images in conjunction with a real-world view of an environment wherein the virtual objects can interact with the real world environment. Embodiments described below can be implemented in AR, VR, or MR

As used herein, the term "real-world environment" or "real-world" may refer to the physical world (also referred to herein as "physical environment." Hence, term "real-world arrangement" with respect to an object *(e.g.* a body part or user interface device) may refer to an arrangement of the object in the real-world and may be relative to a reference point. The term "arrangement" with respect to an object may refer to a position (location and orientation). Position can be defined in terms of a global or local coordinate system.

As used herein, the term "rendered images" or "graphical images" may include images that may be generated by a computer and displayed to a user as part of a virtual reality environment. The images may be displayed in two or three dimensions. Displays disclosed herein can present images of a real-world environment by, for example, enabling the user to directly view the real-world environment and/or present one or more images of a real-world environment (that can be captured by a camera, for example).

As used herein, the term "head mounted display" or "HMD" may refer to a display to render images to a user. The HMD may include a graphical display that is supported in front of part or all of a field of view of a user. The display can include transparent, semi-transparent or non-transparent displays. The HMD may be part of a headset. The graphical display of the HMD may be controlled by a display driver, which may include circuitry as defined herein.

As used herein, the term "electrical circuitry" or "circuitry" may refer to, be part of, or include one or more of the following or other suitable hardware or software components: a processor (shared, dedicated, or group); a memory (shared, dedicated, or group), a combinational logic circuit, a passive electrical component, or an interface. In certain embodiment, the circuitry may include one or more virtual machines that can provide the described functionality. In certain embodiments, the circuitry may include passive components, e.g. combinations of transistors, transformers, resistors, capacitors that may provide the described functionality. In certain embodiments, the circuitry may be implemented using, or functions associated with the circuitry may be implemented using, one or more software or firmware modules. In some embodiments, circuitry may include logic, at least partially operable in hardware. The electrical circuitry may be centralized or distributed, including being distributed on various devices that form part of or are in communication with the system and may include: a networked-based computer, including a remote server; a cloud-based computer, including a server system; or a peripheral device.

As used herein, the term "processor" or "host/local processor" or "processing resource" may refer to one or more units for processing including an application specific integrated circuit (ASIC), central processing unit (CPU), graphics processing unit (GPU), programmable logic device (PLD), microcontroller, field programmable gate array (FPGA), microprocessor, digital signal processor (DSP), or other suitable component. A processor can be configured using machine readable instructions stored on a memory. The processor may be centralized or distributed, including distributed on various devices that form part of or are in communication with the system and may include: a networked-based computer, including a remote server; a cloud-based computer, including a server system; or a peripheral device. The processor may be arranged in one or more of: a peripheral device, which may include a user interface device and/or an HMD; a computer (*e.g.* a personal computer or like device); or other device in communication with a computer system.

As used herein, the term "computer readable medium/media" may include conventional non-transient memory, for example, random access memory (RAM), an optical media, a hard drive, a flash drive, a memory card, a floppy disk, an optical drive, and/or combinations thereof. It is to be understood that while one or more memories may be located in the same physical location as the system, the one or more memories may be located remotely from the host system, and may communicate with the one or more processor via a computer network. Additionally, when more than one memory is used, a first memory may be located in the same physical location as the host system and additional memories may be located in a remote physical location from the host system. The physical location(s) of the one or more memories may be varied. Additionally, one or more memories may be implemented as a "cloud memory" (*i.e.,* one or more memory may be partially or completely based on or accessed using the network).

As used herein, the term "communication resources" may refer to hardware and/or firmware for electronic information transfer. Wireless communication resources may include hardware to transmit and receive signals by radio, and may include various protocol implementations, e.g., 802.11 standards described in the Institute of Electronics Engineers (IEEE), Bluetooth^{™}, ZigBee, Z-Wave, Infra-Red (IR), RF, or the like. Wired communication resources may include; a modulated signal passed through a signal line, said modulation may accord to a serial protocol such as, for example, a Universal Serial Bus (USB) protocol, serial peripheral interface (SPI), inter-integrated circuit (I2C), RS-232, RS-485, or other protocol implementations.

As used herein, the term "network" or "computer network" may include one or more networks of any type, including a Public Land Mobile Network (PLMN), a telephone network *(e.g.,* a Public Switched Telephone Network (PSTN) and/or a wireless network), a local area network (LAN), a metropolitan area network (MAN), a wide area network (WAN), an Internet Protocol Multimedia Subsystem (IMS) network, a private network, the Internet, an intranet, and/or another type of suitable network.

As used herein, the term "sensor system" may refer to a system operable to provide position information concerning input devices, peripherals, and other objects in a physical world that may include a body part or other object. The term "tracking system" may refer to detecting movement of such objects. The body part may include an arm, leg, torso, or subset thereof including a hand or digit (finger or thumb). The body part may include the head of a user. The sensor system may provide position information from which a direction of gaze and/or field of view of a user can be determined. The object may include a peripheral device interacting with the system. The sensor system may provide a real-time stream of position information. In an embodiment, an image stream can be provided, which may represent an avatar of a user. The sensor system and/or tracking system may include one or more of a: camera system; a magnetic field based system; capacitive sensors; radar; acoustic; other suitable sensor configuration, optical, radio, magnetic, and inertial technologies, such as lighthouses, ultrasonic, IR/LEDs, SLAM tracking, light detection and ranging (LIDAR) tracking, ultra-wideband tracking, and other suitable technologies as understood to one skilled in the art. The sensor system may be arranged on one or more of: a peripheral device, which may include a user interface device, the HMD; a computer *(e.g.,* a P.C., system controller or like device); other device in communication with the system.

As used herein, the term "camera system" may refer to a system comprising a single instance or a plurality of cameras. The camera may comprise one or more of: a 2D camera; a 3D camera; an infrared (IR) camera; a time of flight (ToF) camera. The camera may include a complementary metal-oxide-semiconductor (CMOS), a charge-coupled device (CCD) image sensor, or any other form of optical sensor in use to form images. The camera may include an IR filter, which can be used for object tracking. The camera may include a red-green-blue (RGB) camera, which may be used for generation of real world images for augmented or mixed reality simulations. In an embodiment different frames of a single camera may be processed in an alternating manner, *e.g.,* with an IR filter and for RGB, instead of separate cameras. Images of more than one camera may be stitched together to give a field of view equivalent to that of the user. A camera system may be arranged on any component of the system. In an embodiment the camera system is arranged on a headset or HMD, wherein a capture area of the camera system may record a field of view of a user. Additional cameras may be arranged elsewhere to track other parts of a body of a user. Use of additional camera(s) to cover areas outside the immediate field of view of the user may provide the benefit of allowing pre-rendering (or earlier initiation of other calculations) involved with the augmented or virtual reality rendition of those areas, or body parts contained therein, which may increase perceived performance (*e.g.,* a more immediate response) to a user when in the virtual reality simulation. This can be an important aspect to ensure safe and pleasant use of VR. The camera system may provide information, which may include an image stream, to an application program, which may derive the position and orientation therefrom. The application program may implement known techniques for object tracking, such as feature extraction and identification. Examples include the speed-up robust features (SURF) algorithm. An example of a camera presently available is the Pro C920 or C930 Full HD by Logitech.

As used herein, the term "user interface device" may include various devices to interface a user with a computer, examples of which include: pointing devices including those based on motion of a physical device, such as a mouse, trackball, joystick, keyboard, gamepad, steering wheel, paddle, yoke (control column for an aircraft) a directional pad, throttle quadrant, pedals, light gun, or button; pointing devices based on touching or being in proximity to a surface, such as a stylus, touchpad or touch screen; or a 3D motion controller. The user interface device may include one or more input elements. In certain embodiments, the user interface device may include devices intended to be worn by the user. Worn may refer to the user interface device supported by the user by means other than grasping of the hands.

As used herein, the term "input element" or "user interface" may refer to an object that the user interacts with to provide user input to a computer system. The input element or user interface may include a user manipulatable object, examples of which include: steering wheel; stick; pedal; mouse; keys; buttons; control pad; scroll wheel; flight yoke; light pen or other stylus device; glove, watch or other wearable device; rotational elements such as a dial or knob, motion detector; touch sensitive device. The user input element may be adapted to provide an input in other manners, including by the determination of a movement of a body part, including a touch pad.

As used herein, the term "totem" may, for example, include one or more physical or virtual objects which are manipulatable by the user to allow input or interaction with the AR, MR, or VR system. The totem may be used as a user interface device or a controller or as an object in virtual space. Some totems may take the form of inanimate objects, for example a piece of metal or plastic, a wall, a surface of table. Alternatively, some totems may take the form of animate objects, for example a hand of the user. The totems may not actually have any physical input structures (*e.g.,* keys, triggers, joystick, trackball, rocker switch). Instead, the totem may simply provide a physical surface, and the AR, MR or VR system may render a user interface so as to appear to a user to be on one or more surfaces of the totem. For example, the AR, MR or VR system may render an image of a computer keyboard or trackpad to appear to reside on one or more surfaces of a totem. For instance, the AR system may render a virtual computer keyboard and virtual trackpad to appear on a surface of a thin rectangular plate of aluminum which serves as a totem. The rectangular plate may not itself have any physical keys or trackpad.

As used herein, the term "IMU" refers to an Inertial Measurement Unit which may measure movement in six Degrees of Freedom (6 DOF), along x, y, z Cartesian coordinates and rotation along 3 axes - pitch, roll and yaw. In some cases, certain implementations may utilize an IMU with movements detected in fewer than 6 DOF *(e.g.,* 3 DOF as further discussed below).

As used herein, the term "keyboard" may refer to an alphanumeric keyboard, emoji keyboard, graphics menu, or any other collection of characters, symbols or graphic elements. A keyboard can be a real world mechanical keyboard, or a touchpad keyboard such as a smart phone or tablet On Screen Keyboard (OSK). Alternately, the keyboard can be a virtual keyboard displayed in an AR/MR/VR environment.

As used herein, the term "fusion" may refer to combining different position-determination techniques and/or position-determination techniques using different coordinate systems to, for example, provide a more accurate position determination of an object. For example, data from an IMU and a camera tracking system, both tracking movement of the same object, can be fused. A fusion module as describe herein performs the fusion function using a fusion algorithm. The fusion module may also perform other functions, such as combining location or motion vectors from two different coordinate systems or measurement points to give an overall vector.

As used herein, the numbering of elements is consistent from figure to figure, so that the same element is shown in different figures.

### Overview

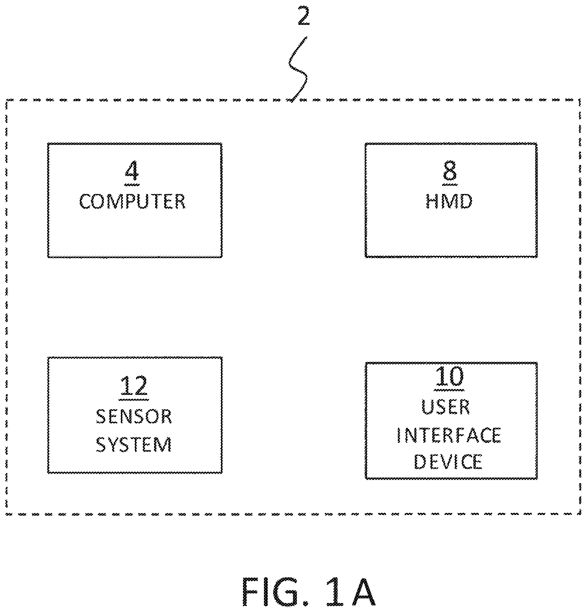

Referring to figure 1A, a virtual reality system **2** includes a computer **4,** which can be capable of providing a virtual reality environment a user. The system **2** includes a display, which can be embodied as an HMD **8,** virtual reality display (not illustrated), or other display capable of providing computer-rendered images to a user. The computer **4** can facilitate display of the virtual reality environment via the HMD **8** (by including a display driver, for example). The system **2** includes a physical user interface device **10** to enable a user to interface with the virtual reality environment facilitated by the computer **4.** The user interface device **10** can receive input from the user for user control of the virtual reality environment. The system **2** can include a sensor and tracking system **12** to provide position and orientation information to the computer **4,** e.g. of a body part of a user, which can include a user head orientation and/or hand orientation or of another object which may include a peripheral device or other object as will be discussed.

Figure IB illustrates a particular embodiment of a virtual reality system with a sensor and tracking system, which can be similar to sensor and tracking system 12. A user 6 is illustrated as wearing HMD 8. Two peripherals or input devices are shown - a keyboard 102 and a mouse 104. The location and movement of the keyboard 102 and/or mouse 104 (and/or hands of user 6) can be monitored with one or more cameras or other sensors. Shown in figure IB are sensors 108 and 110 on keyboard 102, a video conference camera 112, a webcam 114 and a security camera 116. Cameras can also be mounted on HMD 8, elsewhere on the user 6, on a drone, or anywhere else with a view of the physical environment. Each camera can be a stereo camera, with two side-by-side image sensors to provide a 3D image with depth, or can otherwise be used to determine location of an object within 3D space (e.g., by using other depth sensing technologies or by determining position information by combining images from multiple images obtained from different viewpoints). As should be understood, various other sensor technologies can be used to determine a location of a peripheral device (e.g., keyboard 102 or mouse 104) within a physical environment. For example, ultrasound, electromagnetic, inertial sensors mounted to peripheral devices, optical sensors, can be used in any combination to obtain position information. In certain embodiments, sensor fusion techniques can be used to combine positioning information obtained from different types of sensors or from different viewpoints to determine a position.

One or more of the cameras or other sensors can detect objects in the physical environment and can identify those objects through a variety of methods as described in more detail below. For example, a coffee cup 118 may be detected from a barcode 120, an RFID tag, or other identifier. For an RFID tag, instead of, or in addition to, using a camera, an RFID reader could be used. Alternately, a computer 4 can instruct the keyboard 102 or mouse 104 to flash an indicator light so it can be identified. The cameras or other sensors can detect which peripheral or object the user's hands are near or touching, and the movement of the user's hands with respect to that object. In certain embodiments, imaging sensor(s) (e.g., visual, ultrasound sensors) can be used to classify certain objects (e.g., utilizing object detection techniques. An input device may include communication capabilities (e.g., a wireless transceiver) and be able to provide identification information to computer 4.

A space near or on any of the objects can be designated as a gesture space. For example, a determine three-dimensional volume of airspace above the keyboard can be used for hand gestures which can be interpreted as commands for computer 4 for a user to interact with a virtual reality environment. Multiple gesture spaces can be defined. For example, a gesture near the mouse 104 may have a different meaning, or use different gestures, than gestures over the keyboard 102 or on the display 106. More description is provided below.

As described in more detail below, an image of the object or peripheral device (e.g., a captured image or an image provided by a peripheral device) can be imported into the virtual reality environment for presentation to a user interacting within the virtual reality environment. For example, an image of keyboard 102 can be imported into the virtual reality environment for a user to interact with. Alternately, the image can be augmented or otherwise changed or moved. For example, the types of keys shown on a keyboard representation could be changed from alphanumeric to emojis. An input that isn't present can be projected onto the object in the virtual reality environment, such as a keypad on top of mouse 104 or even on coffee cup 118.

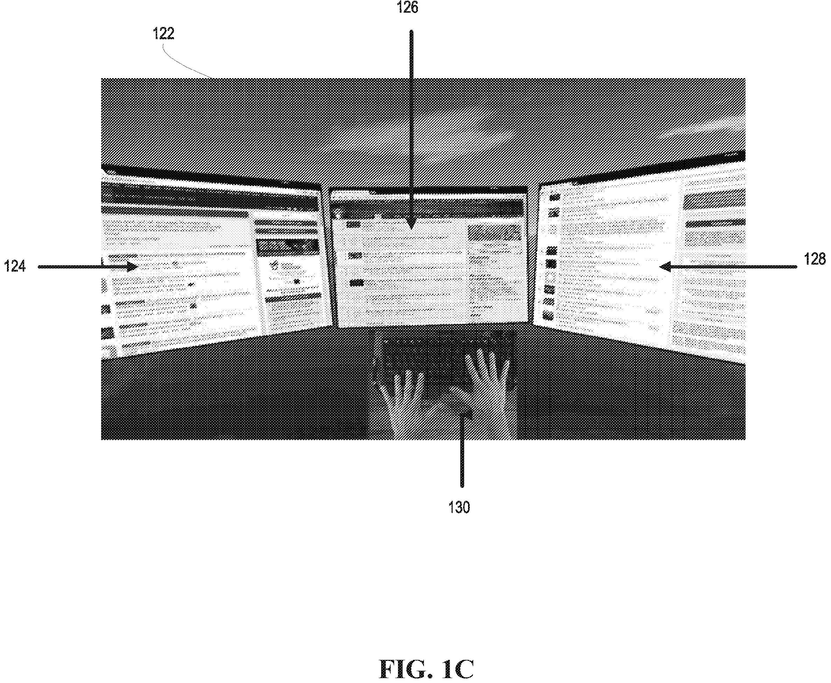

Figure 1C illustrates a particular embodiment of the view 122 of a virtual reality environment through HMD 8. In this embodiment, the virtual reality environment is used to display multiple windows of a computer monitor without requiring multiple physical monitors. As shown, virtual displays 124, 126 and 128 are shown. Also shown is a virtual representation 130 of the physical keyboard and user's hands, injected into the virtual reality environment.

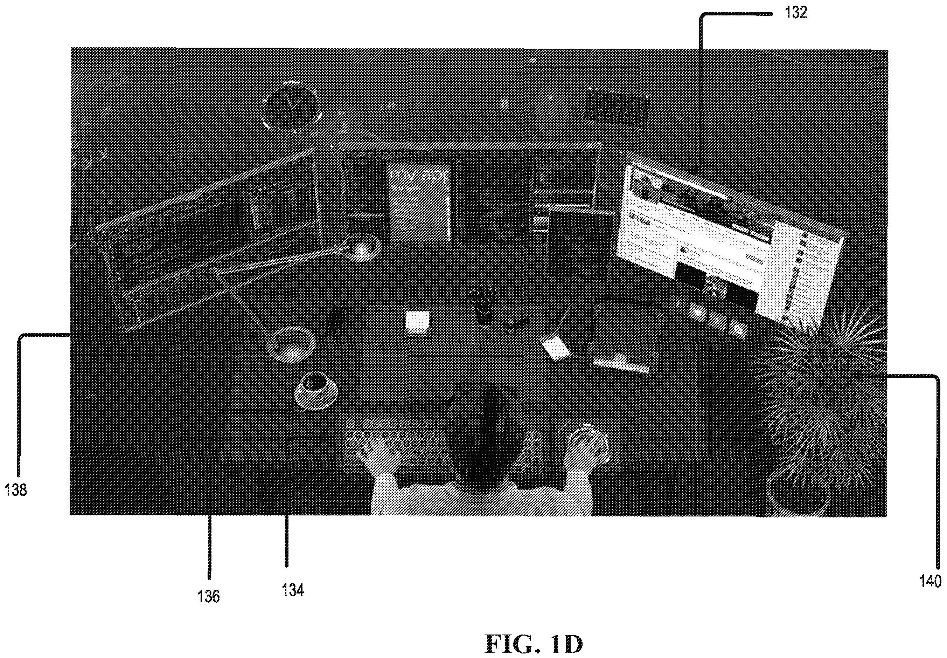

Figure 1D illustrates a particular embodiment of a virtual reality environment with multiple virtual displays, such as display **132.** In addition, a virtual display **134** of a physical keyboard and/or the user can be provided. Finally, virtual representations of other physical objects can be provided, such as a virtual coffee cup **136** and a virtual lamp **138.** This enables the user, for example, to grab the real coffee cup and take a drink while wearing the HMD **8.** A notepad and pen are other objects that can be identified and injected into the virtual reality environment, so a user can physically write notes while wearing HMD **8.** Other items, such as a user's watch, can be injected so the user can check the time on their real watch. An office door behind the user can be monitored, and can be displayed on a rear-view mirror in the virtual reality environment.

Figure IE is a high level diagram of an augmentation and tracking system operation. A camera 142 can provide video to an augmentation engine 150 and a tracking engine 152. Video from other cameras, and/or other sensing data from other sensors can be provided. The video and other sensing data can be used for two purposes. First, the video and/or sensor data is used to provide a realistic (e.g., "real world representation) display of one or more peripherals and the user's hands in the virtual reality environment. Second, the video and/or sensor data is used to track the user movements with respect to the peripherals.

Separately, control inputs from keyboard 148 can be provided to augmentation engine 148 and tracking engine 152. Determination of which key is depressed, or about to be depressed, can be detected by an actual key press which can generate a corresponding signal, a proximity sensor on the key, and/or from the camera 142 or other sensors. The control signals can be provided to "press" the appropriate key in the virtual reality environment, as well as determine which key should be augmented. The video and control signals, as augmented and modified, can be provided to application and operating system software 154 for the HMD 8.

In one embodiment, a representation 146 of the keyboard and user's hands is displayed on a physical monitor 144, and then the display of the physical monitor is imported into the HMD 8. Alternately, representation 146 is only generated in the HMD, providing more flexibility on positioning, such as under a desired one of multiple virtual monitors in the virtual reality environment.

### Network and Computer elements

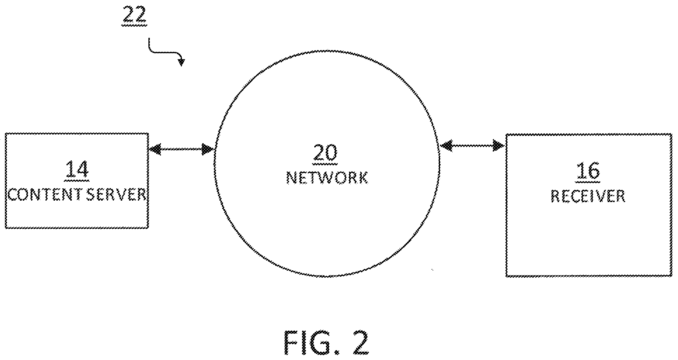

Figure 2 is a block diagram showing an embodiment of a networked system 22 for providing content to the virtual reality system of figure 1A. A content server 14 may provide some or all of the video content or other data or controls to the computer 4 of figure 1A, through a network 20 and a receiver 16 in communication with computer 4. Network 20 can be the Internet, a Wide Area Network (WAN), a Local Area Network (LAN) or any other network or networks or communication path. Alternately, the computer may generate and/or control the virtual reality environment from locally stored instructions. In one embodiment the computer **4** includes a memory with instructions executable for generation of the virtual reality environment. The number of content servers **14,** receivers **16,** and networks **20** can be modified as appropriate for a particular implementation, such as where content is provided from multiple content servers, or computers of other users in a shared video game. The receiver **16** may connect to the network **20** via wired and/or wireless connections, and thereby communicate or become coupled with content server **14,** either directly or indirectly. Alternatively, receiver **16** may be associated with content server **14** through any suitable tangible computer-readable media or data storage device, data stream, file, or communication channel.

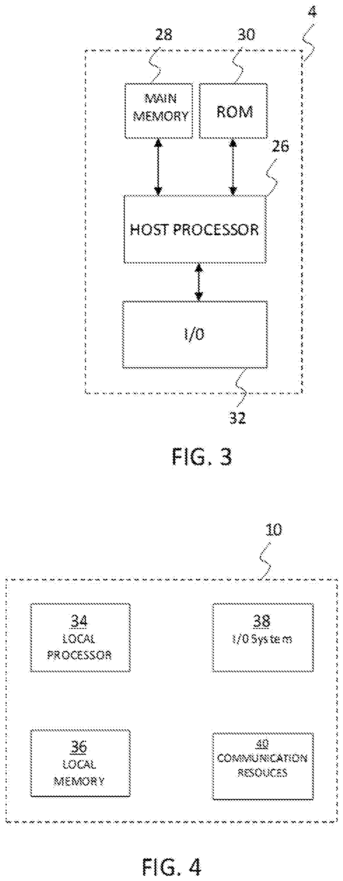

Figure 3 is a block diagram of computer 4. Computer **4** may be implemented with a processor **26** (sometimes referred to herein as a "host processor"). The computer **4** can include memory such as main memory **28** and secondary memory **30.** Main memory **28** may include a random-access memory (RAM) or another type of dynamic storage device that stores information and instructions for execution by processor **26.** Secondary memory **30** may include hard drives or other memory devices that may store instructions or data that may not be directly accessible by processor **26.** The computer **4** can include an input/output (I/O) system **32** to interface the computer **4** with peripheral and input devices, including the HMD **8** and user interface device **10** of figure 1A. One or more device drivers (not shown) may facilitate communication with the peripheral devices. The I/O system **32** may include a display (not shown) in addition to the HMD **8,** which may display images of the virtual reality environment application, operating system application or other images associated with the virtual reality environment. The display may allow configuration of system **2** by the user without needing to wear the HMD **8,** or configuration of system **2** by any other person, or to allow a secondary non-VR display of the virtual reality environment, e.g. for observational, run-time configurational, safety or any other purpose. The display may be a holographic display capable of rendering three-dimensional images for a user without the need of or by supplemented HMD 8. The I/O system **32** may include an audio output device (not shown) such as a speaker, which is preferably coupled to host processor **26** via associated audio circuitry such as, but not limited to amplifiers, filters, and other circuitry known to the skilled person to provide sound output to the user when an audio event occurs during the implementation of an application program. In embodiments the audio output device and associated circuitry may be located on the HMD **8.**

The computer **4** may perform operations based on instructions that may be read into the main memory **28** from a computer-readable medium or from another device via communication resources. The instructions contained in the main memory **28** can cause processor **26** to perform processes that will be described later. Alternatively, hardwired circuitry may be used in place of or in combination with instructions to implement said processes. Thus, various implementations are not limited to any specific combination of hardware circuitry and software.

The computer **4** may implement instructions for determining from an image stream provided by the camera system the arrangement of objects in the capture area. For object tracking the instructions may implement known techniques, such as feature extraction and identification. Examples include the speed-up robust features (SURF) algorithm.

Example implementations of the computer **4** include: a personal computer (PC); workstation; laptop; a home video game console system, which is typically connected to a television set or other display; a set-top box, which can be used, for example, to provide interactive television functions to users; or a network or internet-computer; a media player (such as an MP3 player); a subnotebook/netbook; a tablet computer; a smartphone; a cellular telephone; a personal digital assistant (PDA); other similar electronic device; other suitable device. In certain embodiments, the computer **4** may be incorporated as part of the HMD **8** and/or user interface device **10.** The computer **4** may be operable under various operating systems.

Figure 4 is a block diagram of user interface device 10. The user interface device **10** can include a local processor **34.** By local it is meant that the local processor **34** is separate from the host processor **26** of the computer **4.** The local processor **34** may be provided with instructions to wait for commands or requests from the computer **4** decode the command or request, handle/control input and output signals according to the command or request, control sensors of user interface device 10 for imaging a real world environment in proximity to interface device 10, communicate with other user interface devices, and/or supplement host processor 26 for generation of and interaction within a virtual reality environment. In addition, the local processor **34** and host processor **26** may operate independently of the computer **4** by reading sensor signals and calculating appropriate forces from those sensor signals, time signals, and stored or relayed instructions selected in accordance with a host command. Local memory **36,** such as RAM and/or ROM, is coupled to local processor **34.** Processor 26 is similarly coupled to its own local memory 28, 30.

The user interface device **10** includes an I/O system **38** to provide information to/from the local processor **34.** The I/O system **38** may vary depending on the configuration of the user interface device **10.** In embodiments the I/O system **38** may be incorporated, connected to, or in communication with the sensor system described below. Said input elements may include an associated sensor system coupled to the I/O system **38,** which may include one or more of the following: optical sensor systems; optical encoders; potentiometers; velocity sensors; acceleration sensors; strain gauge; resistive sensors; capacitive (e.g. touch) sensors, or any other type of sensors. A sensor driver (not shown) may be implemented to convert sensor signals to signals that can be interpreted by the local processor **34** or host processor **26.**

The user interface device **10** is coupled to the computer **4** by communication resources **40,** an example of which includes a bi-directional bus such as an RS232 serial interface, RS-422, RS-485, 12C, Universal Serial Bus (USB), MIDI, Firewire or other protocols known to the skilled person or a parallel bus or wireless link, such as BTIe or proprietary wireless protocols, for example. In certain embodiments, the communication resources **40** can supply power from the computer **4** to the user interface device **10** (sometimes simply referred to as an "interface device"). In certain embodiments, a dedicated power supply can be implemented to power user interface device.

The user interface device **10** may not be limited to providing an input to the computer **4,** in certain embodiments, the user interfaced device provides output to the user, for example in the form of visual or and/or haptic feedback.

### Augmented and Mixed Reality

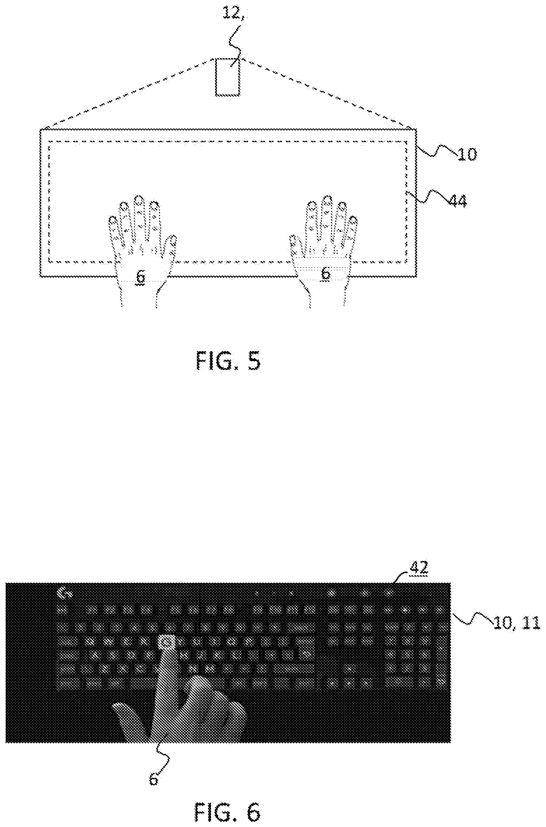

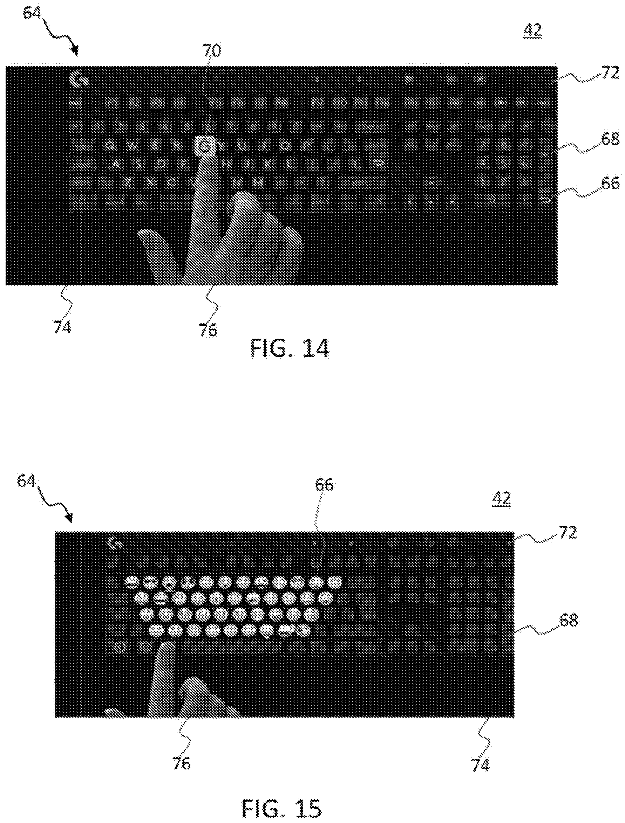

Various input devices, objects, user body parts and even air spaces may be imported into the virtual reality environment as realistically as possible, or may be augmented/changed. One example is highlighting a keyboard key as it is pressed or approached by the finger of a user 6 as shown in figure 6. Another example is changing a portion of the alphanumeric keys into emojis, as shown in figure 15. The changes can be contextual, dependent on user actions, the type of application being interacted with in the virtual reality environment, etc.

In certain embodiments, a physical appearance of aspects of user input devices or other objects can be augmented or changed. A particular keyboard key, knob, mouse button, roller, etc. can be highlighted by lighting, changing color, changing size, making it move or wiggle, changing its shape, etc. For example, a user's hands can have the color changed to improve the contrast with a keyboard or other device. The user's hands can be made partially transparent to allow seeing the keys otherwise obscured by the user's hands. The user's hands can be shown with gloves or jewelry added, for example. The changes can be contextual, such as adding leather gloves when a user is interacting with a steering wheel in a car racing video game, or with a joystick in a flight simulator. The user's hands could be made to appear wrinkled with warts upon being hit with a spell in a witchcraft game. Alternately, the user can dictate and configure the changes, with the user changes optionally being dependent on context. For example, the user can specify a Star Trek uniform shirt sleeve on the depiction of the user's wrists, but only during a space exploration game or genre of games. Typing on Halloween can give the user an option to select different types of alternative images like "monster hands."

In various embodiment, the augmentation can perform a variety of functions, such as: enlarge the key text for optimum viewing; change the transparency of your hands so you can see all the keyboard; change the key layout and text to the appropriate language; change the key layout for more symbols and rich text; change the layout to be a full contextual Emoji layout; change the layout to only show your relevant gaming keys; change the colour/style of your keyboard and desk; write virtual notes and paper and move them into the virtual space; gesture with your hands and interact with the virtual environment; create hot keys on different locations on the keyboard (and desk).

Augmentation can be done for productivity, music creation, video editing etc. The user input device can control the AR/VR desktop (keyboard/mouse and interactive table area) or the user input device can integrate with third party elements such as Twitch.

Inert objects can become input devices in certain embodiments. For example, the virtual keyboard **11** of figure 6 could, in reality, be a portion of a desktop. The user can simply be moving his/her fingers and tapping on the desktop, while having the location and movement of the user's fingers superimposed over a virtual keyboard in the virtual reality environment. The location on the desk to be used as a keyboard can be selected by computer 4 or by the user. A user command can select the area using a typed command, response to a prompt, a gesture, a verbal command, etc. The command can be in combination with the user pointing to the area or making a gesture over the area. The designated area can move in response to designated user gestures or hand positions.

In another example, a coffee mug can become a joystick or puck. Buttons can be superimposed on the virtual representation. The buttons can be placed in fixed locations, or can be place below where the user's fingers happen to be while grasping the coffee cup.

In addition to augmenting or changing buttons, keys, rollers and other input or sensing elements, other aspects of a user interface device or other object can be changed. A color of the frame of a keyboard can be changed, can be made to glow, flash, etc. The shape and appearance can be changed. Typed letters/words can be presented at the top of the keyboard, as if the keyboard had a small display at the top. A mouse can be changed to appear like a live mouse with whiskers in the user's hands, with the whiskers and a tail moving in response to certain inputs or contextually based on what is occurring in the virtual reality environment. Haptic feedback to the mouse can be provided so the user feels the mouse wriggling. The mouse might change into other objects, such as a sword, a bomb, a gun or other object depending on the context of a game, such as a combat game. The change can be triggered by user or other actions in the virtual reality environment, such as the user accumulating a certain number of points.

An injected user interface device video can be customized. In one embodiment, the injection of the user interface device and user hands is accomplished by a peripheral system providing a video to be displayed in a designated portion of the display are of the HMD. The peripheral system can add any desirable content in that video area, such as help prompts on functional capabilities of the user interface device, or even advertisements.

In certain embodiments, camera images can be used to locate a user input device or peripheral, but stored images can be used instead or to enhance the image or replace portions not visible due to being obscured by a user's hands or another object on a desktop. The particular stored image can be obtained by detecting or inputting the model number of the input device.

### Sensor and Tracking System

Objects to be sensed and tracked can be identified in a number of ways. User input devices can be detected upon connection to computer **4,** by either a wired or wireless connection. Image recognition can be used with one or more cameras to locate the user input devices. The user input devices could also be identified by having computer **4** cause an indicator light on the device to flash, to be detected by the camera. Or the user could be prompted to touch or manipulate the device. Image recognition can also be used to detect input devices. For example, a limited number of input device models may be available for use in virtual reality, and a database can store images of those models from different angles for image recognition.

In addition to connected devices, other object can be identified and injected into the virtual reality environment. A user can put barcode labels or RFID tags or other identifiers on the objects to be incorporated. A barcode or RFID reader can be incorporated into a user input device, a peripheral device, a camera, the HMD, or any other object. Alternately, the user can use gestures, such as pointing, to indicate an object to be sensed. Alternately, a particular peripheral, such as a stylus, can be used to touch or point to desired objects. The stylus could light up, or send out IR, radio, NFC or other signals to indicate its position. The gesture could be in combination with an audible or typed command or other input. In this manner, the user can decide what is important to incorporate into the virtual reality space. For example, the furniture may be incorporated so the user can walk around and see the furniture without bumping into it. Drinks or food could be identified so the user can eat or drink while wearing the HMD. A brush or comb could be identified, or nail clippers, so the user can do personal grooming while in the virtual reality environment, perhaps as part of a grooming instruction program.

Identified devices and objects can be injected into the virtual reality environment based on various triggers (described in more detail below). For example, a desk or keyboard may appear only when the user approaches. A desk or other object could appear to avoid the user bumping into it, while other devices or objects could appear upon a trigger indicating a user need for the device or object. The trigger could be a user gesture, command, placing a device upon a surface, or even detecting a user gazing at a device or icon.

Identified user input devices and other peripherals and objects that have been identified can have their images captured by one or more sensors so that the images are available for injection into the virtual reality environment. The same or different sensors can also track the movement of the user input devices and other peripherals and objects, as well as a user's hands and potentially other body parts. Different technologies can be used, such as visible spectrum and IR cameras or sensors for providing images, and lasers for detecting movement. Various sensors and user interface devices can be networked, to work in cooperation for identification, locating, and tracking movement. For example, a keyboard can identify a particular key that was pressed, and a laser and camera can both detect a finger moving downward above that key. The various actions can be correlated, used to confirm, or used where one of the sensors is blocked or otherwise does not have a high confidence detection.

A gesture space can be defined in certain embodiments. For example, a space above a keyboard and/or mouse can be defined as a gesture space. Alternately, any other space or surface can be designated for gestures. For example, a portion of the desktop, or a mousepad on the desktop, can be turned into a touch sensor. Multiple gesture spaces or surfaces can be used in combination, or separate gesture spaces or surfaces could be used for different purposes, based on location and context of what is happening in the virtual reality environment.

A gesture space or surface can remain inactive until activated, so a user doesn't inadvertently cause something to happen with a gesture. Activation can be by a gesture, such as pointing to the space or surface, by a button press, verbal or typed command, or any other input. Gesture spaces can be activated automatically based upon context, such as activating a touchpad when a particular virtual display is presented in the virtual reality environment. The activation can be combined with the display of a virtual touchpad in the appropriate space in the HMD. A phantom, faded, or other representation of the gesture space or surface can be shown when inactive, so the user knows where it is. For example, a square or round fog cloud could be shown in the appropriate space.

A sensor based on radar technology can be used to pick up gestures around a peripheral. These gestures can enable the user to perform recurrent actions that normally require pressing a non-intuitive key on the keyboard. Some examples are set forth below.

Swipes to the left or right in within a gesture space could be used to (1) switch a window rendered within a virtual desktop, (2) enable / disable the display of a virtual keyboard, (3) based on the context, move forward / backward in a video, next / previous song, next / previous photo in the slideshow, etc.

If unable to quickly identify a key or special character, give the ability to the user to draw it intuitively near the keyboard to input the desired character. This could use character prediction to reinforce the confidence level of the gesture detected.

A sensor based on IR lasers to identify fingers on an edge or the peripheral, or all around the peripheral could be used. These lasers would be close to the table top surface and detect up to 10 fingers and their respective locations. The same types of use-cases can arise from this type of sensor as for the radar sensor. This sensor could, however, be able to pick up other types of gestures and create new use-cases, such as: detect a two or three fingers gesture that describes an action that aims at increasing / reducing the size of an object. This can allow a user to perform an action that complements the usage of (1) a pointing device, (2) voice interactions, (3) gaze interactions, by providing a multi-modal way to perform the given action. E.g. using a stylus, using the gesture to modify a size of the brush used while drawing, etc.

In certain embodiments, a sensor and tracking system can be incorporated in one or more user input devices or peripherals. Alternately, they can have portions implemented in different devices, such as object detection sensors in a puck on the desktop, motion tracking in cameras such as a webcam, and tracking software for analysing the sensor data in the keyboard or in computer 4, or a combination. A "smart puck" or "hub" peripheral can be provided on the desk that is able to sense and locate other peripherals (i.e., the keyboard) and track them. Depending on where the puck is set, a context can be assigned to it, hence enabling it to become your desk, your TV setup or another environment. The puck can be a portable or wired device that is equipped with sensors that allow it to perceive peripherals nearby. Such sensors can be based on IR photodiodes (Vive-like), ultrasonic, magnetic, optical, etc. technologies.

In one embodiment, the distorted representation of the user's peripheral and hands from one camera or sensor can be rectified by applying a perspective distortion algorithm based on the computed difference of perspective from two types of sensors.

### Triggering

The appearance of a user interface device, peripheral or other object can be triggered by context. Also, the position and presentation can be varied based on the same or different triggers. For example, a keyboard can be shown in its actual position, or a fixed position relative to the actual position. The keyboard could be attached to the bottom of a display where typing is occurring in the virtual reality environment. Alternately, the user's gaze can be tracked, and the keyboard can follow where the user is gazing. The triggers can be customized by the user, and can vary depending on the software application or mode of operation.

The type of user input device can be trigged by context, as well as the position in the virtual reality environment, and when to inject and when to remove. For a message window, a keyboard can be injected below the message window when a message is received, or the user opens the messaging application. If the user selects a fighter pilot game, a joystick may be automatically injected. For selection of a racing game, a steering wheel can be automatically injected. The injected objects also won't always be put in front of the user. Thus, there is a multiple-faceted decision tree, such as: 1) trigger event detected; 2) determine real world arrangement; 3) determine, based on the context, where to inject the peripheral; 4) guide the user to the peripheral (perhaps lighting keys up or giving directional arrows or haptics or sounds or another prompt.

The appearance of particular user interface devices, peripherals or objects can be triggered by the user approaching them, an application in the virtual reality space requiring them at a particular point in time, an explicit user command, or a combination. The location for injection and the type of injection is also triggered by the context, as customized by a user.

### Inserted Graphical Environment

Figure 6 shows a graphical environment 42 for insertion into the virtual reality environment of HMD 8. Graphical environment 42 can include video images shown (of the keyboard and hand), for insertion into the virtual reality environment. Graphical environment 42 can also include control or input signals corresponding to key presses and other inputs from keyboard 11. Graphical environment 42 may be created by one or both of processor **26** in computer **4** and processor **34** in user interface device **10.** The processor(s) provide instructions for generation of a video display or other image insertion into graphical environment **42,** which is inserted into, or combined with, a virtual or augmented or mixed reality environment of HMD **8.** Whilst reference is made to the processor **26** of the computer **4,** it will be understood that any processing resource arranged as part of the system **2** (various examples of which are disclosed here in) or other processing resource in communication with the system may be utilised. The instructions may be provided to the HMD **8** for display of the virtual reality environment (including a display driver coupled thereto).

Embodiment arrangements of the user interface device **10,** implemented as the keyboard **11** will now be provided. Both reference numbers 10 and 11 are used to emphasize that the shown keyboard 11 could be any other user input device 10. It will be understood that the arrangements may be applied to other implementations of the user interface device **10,** various example implementations are provided herein.

Referring to figure 5, a keyboard **11** includes input elements **44** (keyboard keys, touchpad, roller, mini-joystick, etc.). The sensor system **12** is arranged to provide information to help determine a real-world arrangement of a body part of a user **6** (e.g. the hands of a user including digits). The real-world arrangement may be determined relative to the user interface device **10.** The real-world arrangement body part of user **6** may be determined during interfacing of the body part of user **6** with the user interface device **10.** As used herein "interfacing" may refer to a body part of user **6** interacting with the one or more input elements **44** or in operative proximity to interface with said elements. A portion or all of the sensor system **12** is operatively connected to or imbedded in the user interface device **10** in one embodiment. In embodiments operatively connected may refer to one or more of the following: the sensor system **12** physically connected to the user interface device **10** (e.g. arranged on a body thereof); the sensor system **12** physically connected to a device that the user interface device **10** can be connected to (e.g. a docking station), supported by (e.g. a support platform), or otherwise proximally aligned in relation thereto. Referring back to figure 5, the sensor system **12** can be arranged above the keyboard **11** to capture interaction with the keyboard during use.

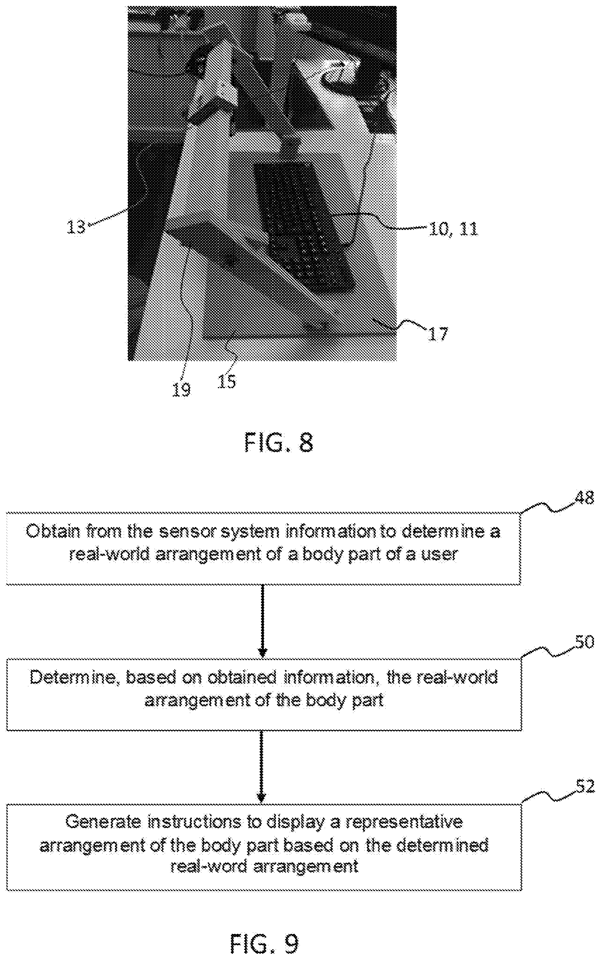

Referring to figure 8, peripheral device 17 is shown. The peripheral device **17** can include a support surface 15 for support of the keyboard **11.** The peripheral device includes an arm **19** extending from the support surface **15.** A camera **13** is arranged on the arm in a position along a proximal gaze direction of user **6** to capture a proximal point of gaze of the user of the interface device. With such an arrangement there may be minimal mapping of the captured image of the body part and/or keyboard **11** to a representative view as will be discussed.

Processor **26** and/or processor **34** can be used to determine a real-world arrangement of the body part of user **6** based on the information of the sensor system **12** in certain embodiments. The real-world arrangement of the body part of user **6** may be determined entirely by the portion of the sensor system **12** operatively connected to the user interface device **10,** implemented as a keyboard **11** operatively or by said portion in combination with another portion of sensor system **12** arranged on a support portion **15** or elsewhere, examples of which include another peripheral device, e.g., the HMD **8,** another display associated with the computer **4,** a workstation surface (e.g. a desk) arranged device that includes a dedicated camera. In some cases, the sensor for detecting a user's hands can be integrated in a peripheral device, hub, an HMD and can be used in any combination, as further described below.

Referring to figure 6, in embodiments the processor **26** and/or **34** can include instructions for creating a representative arrangement in the graphical environment **42** of the body part of user **6** or an peripheral input device based on the determined real-world arrangement of the body part of user **6** or device. The processor **26** and/or **34** can provide a representative arrangement of the user interface device **10** relative to the body part of user **6.** As used herein the term "representative arrangement in the graphical environment" means that the arrangement is in some way representative of the real-world arrangement, including one or more of the position in the user field of view; orientation; scale. The representative arrangement can include the user interface device **10** arranged as being aligned at the top of the graphical environment **42** with the same orientation as in the real-world. The user interface device can be arranged elsewhere in the graphical environment **42.** The representative arrangement can include the body part of user **6** arranged with the same physical orientation as in the real-world and arranged with respect to the user interface deice **10** as in the real-world. A user may be able to observe their interactions with the user interface device **10** in the graphical environment **42.** The user interface device **10** and/or body part can be omitted in certain embodiments. In certain embodiments, either the user interface **10** or the body part of user **6** can be omitted.

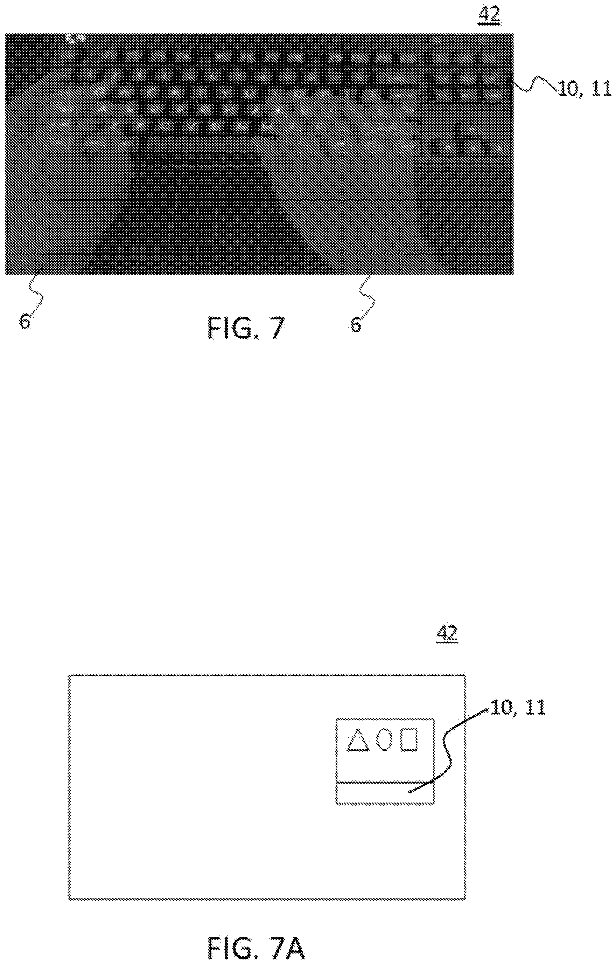

Referring to figure 7, the processor **26** and/or **34** and associated memory can include instructions for displaying the body part of user **6** and user interface **10** arranged an equivalent position in the field of view in the graphical environment **42** to that in the field of view in the real-world environment. As discussed previously, to facilitate the associated processing, the sensor system **12** may provide position information from which a direction of gaze and/or field of view of a user can be determined. Said gaze direction and field of view may thus be determined by the processor **26** and/or **34** and the position in the real-world of the body part of user **6** and user interface **10** determined relative thereto. A user may have enhanced interaction with the user interface device **10** in the graphical environment **42.**

In certain embodiments, one or more cameras of the sensor system **12** can provide images of the body part of user **6** and/or user interface device **10** for rendering in the graphical environment **42.** Said rendering may comprise a simplified image for the graphical environment **42,** e.g. a representative skin tone is implemented represent the body part, which may have the same outline as in the real-word, or an outline image. Said rendering may comprise an alternative image for the graphical environment **42,** e.g. hands of a user are displayed as wearing gloves for a virtual reality environment including a vehicle simulator. In certain embodiments, the body part of user **6** is alternatively represented as including a cursor or other pointing means.

In certain embodiments, sensors of the sensor system **12** operatively connected to the user interface device **10** include capacitive sensors arranged to determine the proximity of the body part of user **6** to the user interface device **10,** e.g. hovering over the keyboard. The capacitive sensors may be arranged on a body of the user interface device **10.** Sensors of the sensor system **12** operatively connected to the user interface device **10** can include one or more cameras arranged on a body of the user interface device **10.** Sensors of the sensor system **12** operatively connected to the user interface device **10** can be arranged in one or more of the following manners: incorporated within the user interface device **10,** proximal a side, front, top, bottom of the user interface device **10** (wherein a top represents the platform of the device and an opposed bottom represents a base); on a body of the user interface device **10,** e.g. to capture an image of an underside of a hand of a user; on a user manipulatable arm extending from the user interface device **10** or another device or object; or other physically connected arrangements.

The processor **26** and/or **34** may determine the real-world arrangement of the body part of user **6** based on the information of the sensor system **12.** In certain embodiments, the real-world arrangement of the body part of user **6** may be determined entirely by the portion of the sensor system **12** operatively connected to the user interface device **10.** In certain embodiments, the real-world arrangement of the body part of user **6** may be determined by a portion of sensor system **12** in combination with another portion of the sensor system **12** arranged elsewhere on the system **2,** examples of which include another peripheral device, e.g. the HMD **8,** another display associated with the computer **4,** a work surface (e.g. a desk) arranged device that includes a dedicated camera, or another like configured user interface device **10.**

In certain embodiments, a processor may map the determined real-world arrangement of a body part and/or user interface device **10** to a representative arrangement by means of a real-time operation, e.g. the application of one or more of a: rotation; translation; enlargement/reduction. The real-time operation may be user configured and/or based on a position of the user interface device **10** relative the sensors system **12**(e.g. with reference to the embodiment associated with figure 8 the positioning of the keyboard relative the support portion). As an example, referring to the embodiment associated with figure 5, the real-world arrangement can be mapped through applying a real-time angle mapping to provide a point of view proximal an estimated user's gaze. In certain embodiments, a user's gaze may be determined (by means discussed previously) and the real-world arrangement actively mapped to said gaze.

Referring to figure 6, the keyboard **11** can be aligned at the top right of the graphical environment **42.** In certain embodiments, the keyboard **11** can be alternatively aligned, including various screen edge positions or with predetermined offsets therefrom. The body part **6** can be arranged with the same orientation and position with respect to the keyboard **11** as in the real-world. In spite of the arrangement of the keyboard **11,** a user may be able to observe their interactions with the keyboard **11** in the graphical environment **42.**

Referring to figures 7 and 7A, in certain embodiments, the keyboard **11** is injected and arranged based on a contextual event, wherein a prompt window appears and the keyboard **11** is bottom edge aligned. For example, when a prompt window appears requiring text input, a peripheral, such as a keyboard, may be injected and aligned with the window. Alignment can occur in a number of ways, such as snapping corners to corners, centering and parallel matching, or user customizable by altering the angle of which the keyboard is displayed. In certain embodiments, the keyboard **11** is alternatively aligned to the promo window, including various screen edge positions or with predetermined offsets therefrom. In embodiments, the contextual event may include an event in the virtual reality environment that requires user input from the user interface device **10** or an electronic notification external the virtual reality environment (e.g. the receipt of a message).

The arrangement of the user interface device **10** can be user configured, e.g. via accessing a preferences setting of the virtual reality environment or other related application program. The user interface device **10** may be user displaceable, e.g. by drag and drop. The user interface device **10** can be locked in place so it doesn't move when the user isn't actively using the prompt window.

The user interface device **10** can include a positioning system (not shown) for determination of the arrangement of the user interface device **10** by the sensor system **12.** The sensor system **12** can provide information to the processor **26** and/or **34** for said determination. This information can come from the sensor system **12,** a tracking system, the HMD **8,** the computer **4,** or from anything that may detect or see the peripheral. The positioning system may include one or more of the following: emitters to emit a signal including one or more of optical (including infra-red), radio waves, acoustic, magnetic field, radio; ultrasound; a characteristic pattern; a characteristic object (including a logo). The positioning system may facilitate convenient and accurate recognition of the interface device **10** and its arrangement.

Referring to figure 9, a, process of interfacing a user with a computer, which may be implemented by the processor, **26** and/or **24** may include, at block **48,** obtaining, from the sensor system **12** operatively connected to a user interface **10,** information to determine a real-world arrangement of a body part of user **6** interfacing with said user interface device **10.** The process may include, at block **50,** determining, based on said information, the real-world arrangement of the body part **6** relative the user interface device. The process may include, at block **52,** generating instructions to display a representative arrangement of the body part of user **6** and user interface device based on the determined real-world arrangement of the body part of user **6.**

A sensor system **12** operatively connected to the user interface device **10** may provide information to determine a physical arrangement of the body part of user **6** and user interface device **10** of accuracy sufficient for determining usage of the user interface device **10,** e.g. fingers interacting with the one or more input element **44.**

### Master peripheral

In certain embodiments, a particular user interface device 10 (or other device) can act as a master peripheral, hub, or anchor peripheral. It may include all or part of the sensor system 12 and do all or part of the processing of sensor data to determine the location of itself or other objects and track them. The anchor peripheral (e.g., a keyboard) can determine and optionally inject into the virtual reality environment other nearby peripherals when contextually relevant. Additional interactions can be provided based upon the combination of peripherals. For example, a first type of interaction can happen when a mouse and keyboard are brought in, and a second type when a keyboard and speaker are brought in, etc.

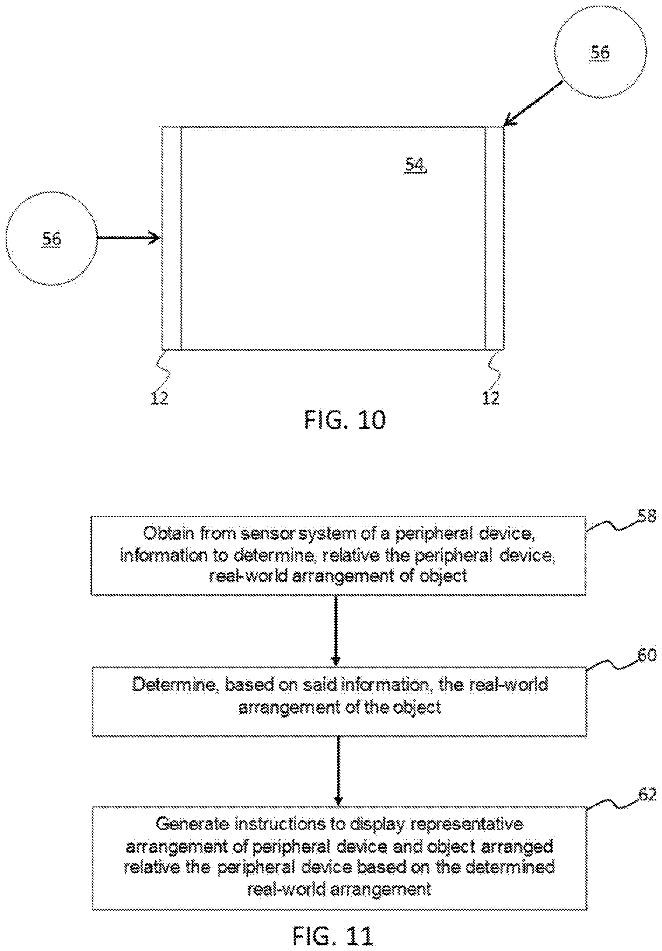

Referring to figure 10, a peripheral device **54** can include a sensor system **12** arranged to provide information to determine, relative the peripheral device **54,** a real-world arrangement of one or more objects **56** (e.g., another user interface device, peripheral, totem, every day object, user's hand for a gesture, etc.). The sensor system **12** may be operatively connected to the peripheral device **54.** Operatively connected may include: incorporated within peripheral device **54;** the sensor system **12** physically connected to the peripheral device **54;** the sensor system **12** physically connected to a member that the peripheral device **54** can be connected to, supported by or otherwise proximally aligned in relation thereto. The sensor system 12 may be operable to detect a position peripheral device 54 within a real world environment. For example, sensor system 12 can include an IMU, imaging, or other sensors.

The object **56** may be located in a proximal field of the peripheral device **54.** The term "proximal field" as used herein may include any two or three dimensional space. Examples include: a work surface supporting said peripheral device **54;** a three-dimensional space proximal user interface device as a game controller which, in use, is held by a user; a mat or pad for use with a user interface device **10** as a pointing device, including a mouse or a stylus.

The processors **26** and/or **34** to determine the real-world arrangement of the one or more object **56** based on the information of the sensor system. The real-world arrangement of the one or more object **56** may be determined entirely by the portion of the sensor system **12** operatively connected to the peripheral device **54** or by said portion in combination with another portion of sensor system **12** arranged elsewhere on the system, examples of which include another peripheral device, e.g. the HMD **8** another display associated with the computer 4, a work surface (e.g. a desk) arranged device that includes a camera.

The processor **26** and/or 34 compiles the sensor data collected from the various systems to inject into the virtual reality environment a representative arrangement of the peripheral device **54** and the objects arranged relative the peripheral device based on the determine the real-world arrangement. In one embodiment, the information provided by the sensor system **12** of the peripheral device **54** is thus used for generating the representative arrangement of the one or more object **56,** which is then associated with the peripheral device **54.**

In certain embodiments, processor **26** and/or **34** maps the arrangement of the one or more object **56** with the peripheral device **54** as the peripheral device is determined to move relative a reference point (e.g. another input device or sensor or other reference position) based on the determined real-world arrangement of the one or more object **56** relative to the peripheral device **54.**

In certain embodiments the sensor system **12** includes a camera and/or capacitive sensors arranged on the peripheral device **54.** The peripheral device **54** can be a dedicated body for the sensor system **12,** e.g. a body to abut, in use, a workstation surface. The object **56** can include any object than may be arranged in the proximal field: other peripheral devices including another user interface device **10;** other objects relevant to the user environment, e.g. a beverage or foodstuff container, smart phone, lamp etc. The object **56** can include the previously described positioning system (not shown) for determination of the arrangement of the user interface device **10** by the sensor system **12.**

In certain embodiments, one or more cameras of the sensor system **12** of the peripheral device **54** provide images of the or each object **56** for rendering in the graphical environment **42.** Said rendering may comprise a simplified image for the graphical environment, e.g. a representative tone is implemented represent the object. Said rendering may comprise an alternative image for the graphical environment.

Referring to figure 11, a process of interfacing a user with a computer, which may be implemented by processor, may include, at block **58,** obtaining sensor data from the sensor system **12** of a peripheral device **54.** The process may include, at block **60,** determining, based on said sensor data, the real-world arrangement of the one or more objects **56.** The process may include, at block **62,** generating instructions to inject into the virtual reality environment a representative arrangement of the peripheral device **54** and the one or more objects **56** arranged relative the peripheral device based on the determined real-world arrangement.

Sensors of the peripheral device **54** may provide information to determine a physical arrangement of the one or more objects **56** to a high level of accuracy. Other sensors (e.g., mounted to an HMD or other display associated with the computer **4**) may, in isolation, not be capable of providing information with such accuracy. Moreover, using information from the sensor system **12** of the peripheral device **54** to determine the real-world arrangement of the one or more objects **56** may enable lower processing resources than said alternatively arranged sensor systems **12.** The peripheral device **54** may relay position information (or the position information processed as said physical arrangement) of a plurality of objects **56** to the computer **4.**

### Layering

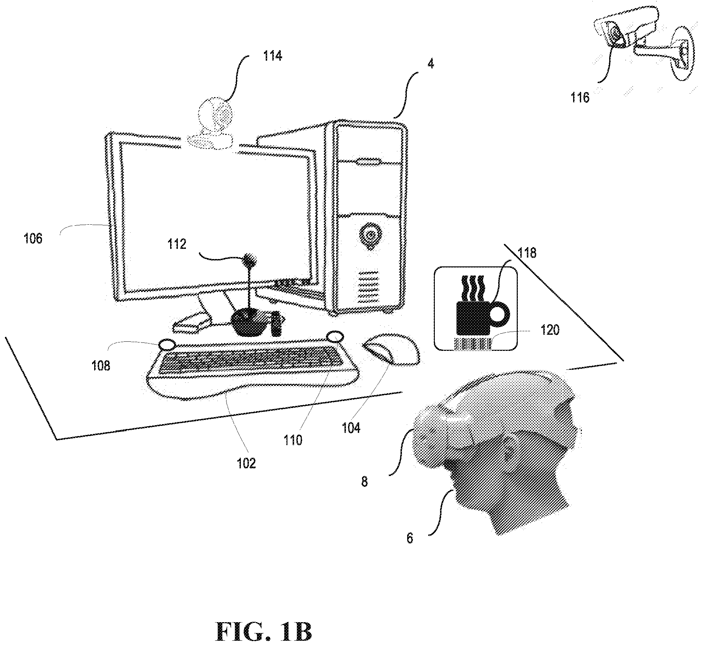

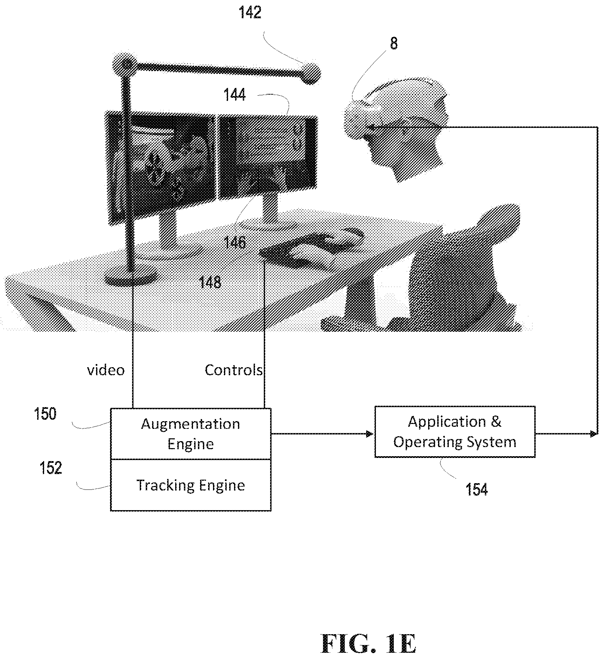

Referring to figures 1 and 12 - 17, an embodiment system **2** to interface a user with a computer **4,** which may implement aspects of the previously described system **2** or any other embodiment disclosed herein, includes a user interface device **10** including one or more input elements **44** to interface the user with the graphical environment **42.**

A memory (not shown) can be communicatively coupled (e.g. for information transfer) to said processor **26** and/or **34** to store a plurality of different layers **64** to represent the user interface device **10** in the graphical environment **42** and/or a field proximal the user interface device **10** and/or a body part **6** interfacing with the interface device **10.** The processor **26** and/or **34** may provide in said instructions one or more of the layers, e.g. the one or more different layers included in the instructions are selected from the plurality of different layers **46.**

As used herein the term "layer" in reference to the graphical environment may refer to a two or three-dimensional representation of an object in the real-world and/or the virtual reality environment. The layer may be rendered from an image of a real-world object (which may be provided from the camera system) or otherwise representative, including by augmentation.

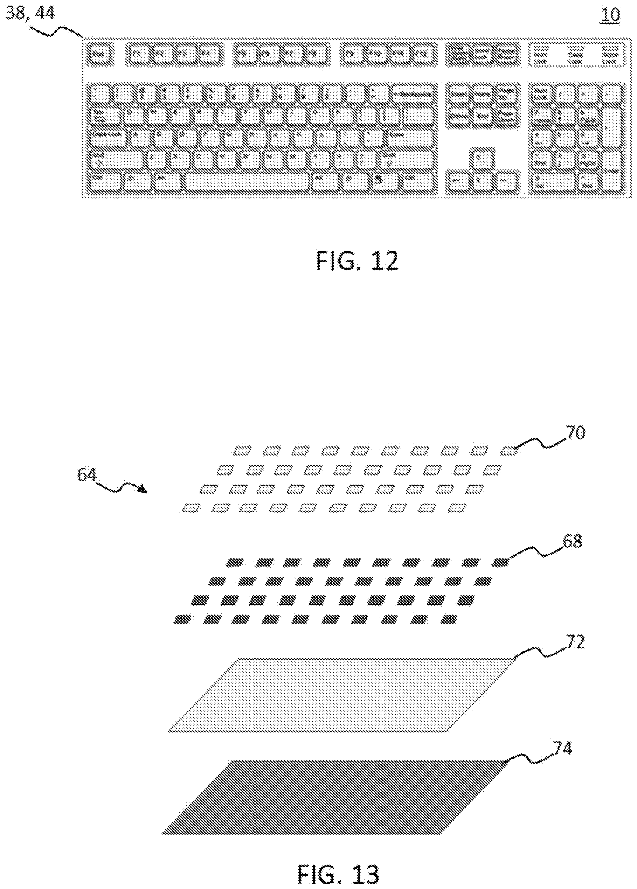

Referring to figure 12, a real-world representation of the user interface device **10,** which implements aspects of the previously described user interface device **10** or any other embodiment disclosed herein, is arranged as a computer keyboard. The keyboard **10** includes input elements **44** of the I/O system **38** to interface the user with said graphical environment **42.** The input elements **44** are arranged as mechanically actuatable keys. In variant embodiments there may be any number of input elements, e.g. one or more. Moreover, said input elements may take other forms include those disclosed herein. Input elements can be included in peripherals which provide enhanced functionality, such as a wheel that has input elements, or a joystick that has buttons and other input elements.

In certain embodiments, a user input device **10** is graphically represented as a series of "overlays" that are displayed in the virtual reality environment to the user on top of one another. The layers modularize the processing and modification of the virtual representation. A layer could be the surface area surrounding a keyboard, a layer can be the enlarged alphanumeric characters, a layer could be highlighting the alphanumeric characters the user is hovering over, a layer could be the hands of the user (semi-transparent, maybe only parts of the hands, etc.). The layers can be contextually relevant, meaning they can change based upon current virtual reality context or other stimuli. In certain embodiments, a user, in the VR environment, may separate the peripheral from the layers, expand the layers to see what has been augmented, and/or customize the layers based upon their preferences.

Layers which fit to the shape of the real physical keyboard can be added to augment the keyboard rendered in the virtual environment and make keycaps more visible and useable. Layers allow for a level of visual feedback (lighting up the augmented image of the key, in a variety of ways) when a key is pressed, as well as transforming the keyboard into a completely new augmented offering - like the emoji keyboard mentioned above, as well as solving localization issues.

The layers can be superimposed over a video image of the actual keyboard or other device from a camera. The alignment can be enhanced by searching for unique shapes on the keyboard, such as corners, a special alignment feature such as a cross-hair on a corner, or the activation of elements of the keyboard, such as lighting a key, frame, or other part of the keyboard and informing a tracking system of what has been illuminated. A keyboard or other device can be manufactured with features that enhance detection and alignment, such as lighting around the edges, high contrast between the keys and frame, etc. Also, particular key presses can be relayed back to the tracking system, so the fingertip and key being depressed can be identified from the image and used to update the alignment. Precision alignment can be prioritized in some embodiments for X, Z dimensions, and yaw, pitch rotation. There is typically less impact on alignment for the Y dimension, and roll is constrained for flat surface usage.

In certain embodiments, an opacity or transparency of each layer can be adjusted initially or dynamically to provide an optimum image. For example, key indicia may be made bright enough to show through a finger when it is pressed, but not otherwise.

Referring to figures 13 - 15, the layers **64** to represent the keyboard **11** can include one or more of the following: an indicia and input element layer **68** to represent one or more of the input elements and the indicia on the input elements as shown in figure 13 (alternately a separate indicia layer **66** may be used to show the indicia separately from the input element, such as a key indicia, as shown in figure 14); a feedback layer **70** to provide user feedback of a state of the one or more input element; a device body layer **72** to represent a body of the keyboard **10.** A proximal layer 74 represents a field proximal to the user interface device 10 (e.g. the work surface, desktop, a mat or pad). It will be understood that the embodiment layer representation can be implemented with other user interface devices than a keyboard, including those disclosed herein.

The indicia layer **66** includes indicia to represent an input function associated with the or each input element **44** (the input function may be stored by the memory coupled to the processor). Referring to figures 14 the indicia layer **66** comprise indicia as alphanumeric and other symbols. Referring to figure 15 the indicia layer **66** comprise indicia as emoji. In embodiments, other indicia of other indicia layers **66** include gaming macros (G-keys), 'hot' keys.

Referring to figure 14, some of the indicia of the indicia layer **66** can comprise the equivalent indicia to the indicia of the real-world user interface device **10** of figure 12 (e.g. the alphanumeric symbols) and some of the indicia of the indicia layer **66** are augmented or changed based on context, such as automatic triggers or user commands. The augmented or changed indicia thus comprise different indicia to the indicia of the real-world user interface device **10** of figure 12 (e.g. the windows key and the enter key). Referring to figure 15 the emoji are different indicia than the indicia of the real-world user interface device **10** of figure 12. Accordingly, in embodiments, the equivalent and/or different indicia can be mapped onto the indicia layer as on the real-world user interface device **10.**

In embodiments where an input element does not provide any function in the virtual reality environment no indicia may be provided in the indicial layer **66,** e.g. referring to figure 15 the input elements peripheral to those associated to the emoji do not have indicia. For example, the edges of the case of a keyboard may not have keys. In one embodiment, non-functional areas may be changed in appearance or have functionality added. Also, keys not currently usable in a given mode may be modified. For example, if the windows key isn't relevant, the windows key can be changed to something the user might deem useful, which in turn inherently means the functionality of the keyboard needs to be modified as layers are incorporated.

The real-world user interface device **10** may not include any indicia associated with the or each input element, wherein, as part of the virtual reality environment, the indicia are specified by the indicial layer **66.** Examples of such a user interface device **10** include a keyboard that has keys without any symbols or a touch pad that has the indicial layer **66** specified to represent keys.

Other user input devices or peripherals may be represented by the same or different layers. For example, a mouse may be represented by an input element layer to represent the mouse buttons and scrolling wheel. A feedback layer modifies the appearance of the input element layer, such as by highlighting the button pressed, enlarging the button or scrolling wheel, a device body layer represents a body of the mouse, which can have its color, shape, etc. changed in the virtual reality environment. These layers can be curved, to correspond to the shape of the mouse. The layers can be continuous or discontinuous, and each layer can be broken into different, separately controlled and displayed portions, or multiple layers could be combined. A proximal layer represents a mousepad or work surface. Similar layers can be provided for a joystick, gamepad, steering wheel, or any other user input device, peripheral or obj ect.

It will be understood that the function of the input element can be linked to the associated indicia of the indicial layer, e.g. as different indicial layers **66** are transitioned the function is correspondingly transitioned. For example, if alphanumeric keys are changed to emojis, the pressing of those keys by the user causes an emoji to be typed, not the alphanumeric character. Other augmentations or changes, such as highlighting or enlarging a key, do not change the function of the key.

In one embodiment, the layers are deconstructed from a camera image, suitably manipulated and augmented, then combined again for display in the virtual reality environment. This may be done as an initialization step, or periodically, such as after detecting the location of the user input device has changed. Alternately, stored images of one or more layers may be combined with the camera image of the input device, based on the obtained model number of the user input device. In one embodiment, the camera image is only used to determine location and movement, and the layers are entirely generated from a pre-stored image.

It will be understood that the input element layer **68** may be configured in a similar manner to the indicia layer **66,** e.g. with some or all of the input elements **44** of the real-world user interface device **10** represented in the input element layer **68.** In embodiments, the input elements may be represented in a different manner to their arrangement in the real-world, e.g., some input elements may not be represented in the input element layer **68** or some input elements with the same function may be combined as a larger input element in the input element layer **68.**

The feedback layer **70** may provide user feedback of a state associated with of the one or more input element **44** that may be represented in the input element layer **68** and/or the indicia layer **66.** The state may include that the associated input element **44** has been interfaced with (e.g. selected) or is contemplated for interfacing with by the body part of user **6.** Interfacing and/or contemplated Interfacing of the input element **44** may be determined by the associated sensor of the I/O system **38** and/or the sensor system **12** (including a sensor system operatively connected to the user interface device **10,** which may include a camera system and/or capacitive sensing system).

As user herein the term "contemplated interfacing" or "contemplated for interfacing" or "contemplated for selection" may refer to a user body part arranged in operative proximity to select or otherwise interface with an input element, e.g. a finger of a user hovers over a key prior to selection.

Referring figure 14, the feedback layer **70** can include a highlighted and enlarged representation of an associated input element and indicia (represented by the input element layer **68** and the indicia layer **66)** of an input element that is contemplated for section by a body part (represented by a body part of a body part layer **76).** In embodiments, the feedback layer **70** may implement various visual indicators of interfacing or contemplated interfacing, examples of which include one or more of the following: highlighting; lowlighting; enlargement; reduction; a color change, of all or part of a graphical representation of an associated input element and/or indicia.

The device body layer **72** may represent any portion of a body of the user interface device **10,** including a peripheral surface (e.g. which forms a planform visible in use of the device to the user) and/or a cross-sectional portion of the device. A planform is the contour of an object as viewed from above.

Referring figures 14 - 16, the device body layer **72** can represent a planform surface, which is visible in use of the body of the keyboard **10,** and is arranged around the input elements 44 thereof.

In embodiments, when representing other user interface devices **10,** the body may include a wheel of an electronic steering wheel or a stick and/or base of a joy stick, a mouse, speaker, or any other user input device, peripheral or object. In certain embodiments, the device body layer **72** can represent only an operative portion of the user interface device **10,** e.g. only the numerical entry portion of the keyboard **10** is represented. In certain embodiments, the body layer **72** can represent an alternative device other than the real-world user interface device **10,** e.g. the keyboard **11** can be represented as an alternative peripheral device such as a game controller.

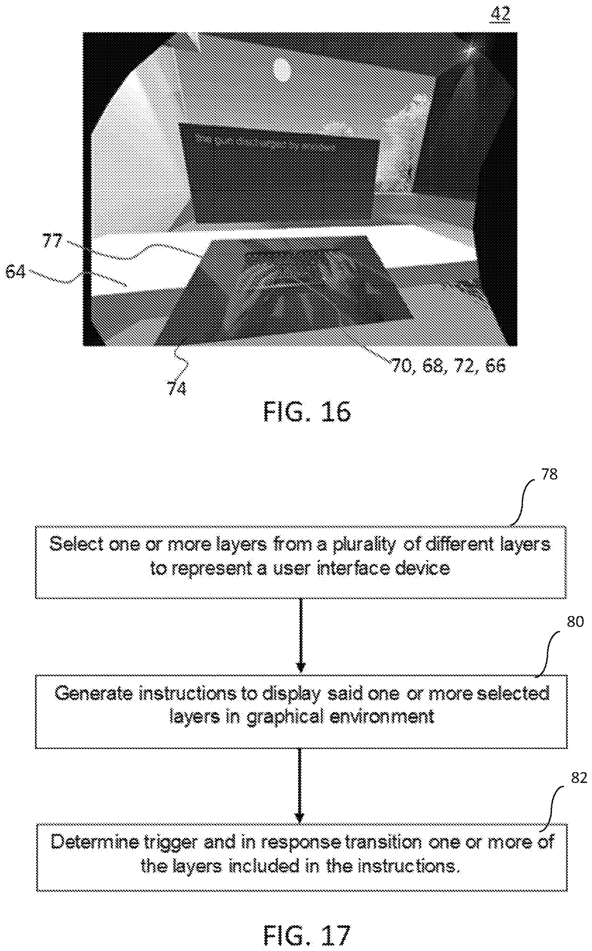

Referring to figures 13 - 16, the layers **64** can include a proximal layer **74** to represent a field proximal the user interface device **10** as defined herein (e.g. the work surface, a mat or pad, etc.). The proximal layer **74** may thus include a representation of any of the previously described objects that may be arranged in said proximal field. In embodiments, the proximal layer **74** may include environmental media **77.** Referring to figure 16, the environmental medial 77 includes light and/or shadows present in the real-world environment, including from daylight, room lighting or other ambient light. The objects and environmental media **77** and may be determined by the sensor system **12.**

Referring to figure 14 - 16 the layers **64** include a body part layer **76** to represent a body part **6.** The body part may be represented in the body part layer **76** as discussed previously. A layer can be provided that is responsive to motion, such as an interactive space which allows users to manipulate objects (e.g., totems or VR images), using the sensor system.

Referring to figures 14 - 16, various layers **64** can be superposed on each other. Referring to figure 16 the body part layer **76** can be represented as partially transparent, through which other layers are visible. Accordingly, in embodiments, one or more of the layers **64** may by represented as partially transparent, wherein: a partially transparent layer may be superposed on another layer (which may be another partially transparent layer or a solid layer); and/or a layer (which may be a solid layer) is superposed on a partially transparent layer.

In certain embodiments, one or more of the layers can represent different positions of a depth direction associated with the user interface device 10, e.g. a solid base layer is superposed by other layers of increasing transparency based on depth. Alternately, as described above, the layers correspond to different functions, such as input elements or keys, which may extend down inside another layer, such as a device body layer.

In certain embodiments, various combinations of one or more of the layers **66 - 76** or other layers can be provided in non-transitory computer-readable media accessed by instruction running on a processor. In certain embodiments, one or more of the layers **64** are stored on a memory of the user interface device **10,** and may be transferred to the computer **4** for processing. In certain embodiments, one or more of the layers **64** can be stored on a memory associated with the computer **4** and can be obtained following identification of the user interface device 10, e.g. by means of a database, which may have a key-value or other suitable implementation. The user interface device **10** may be identified by techniques including one or more of the following: transmitting a unique identifier to the computer **4** (which may be used as the key); by image processing of an image, which may be obtained by the camera system; a positioning system as previously discussed.

In certain embodiments, the processors **26, 34** may partially or fully generate one or more of the layers based on images of the user interface device **10,** which may be obtained from the camera system. In certain embodiments, the user interface device **10** may be adapted to facilitate said generation of the one or more layers. Said adaption may include the formation of a non-reflective surfaces and/or surfaces which are convenient to identify.

In certain embodiments, the one or more layers **64** can be arranged representative of the real-word arrangement of the associate object. The body part layer may include representative arrangement of the body part **6** based on the determined real-word arrangement of the body part **6.** The body part of the body part layer and the layers representing the user interface **10** may be arranged an equivalent position to that in the real-world, including in the field of view in the graphical environment **42** equivalent to that in the field of view in the real-world environment. The sensor system **12** for determining the real-world arrangement of the body part **6** and/or user interface device **10** may be operatively connected to the user interface device **10** as previously discussed.

In certain embodiments, one or more of the layers **64** can be user customisable, an example includes the indicia of the indicial layer **68** may be selected by the user and/or the configuration of the feedback layer **70** may be selected by the user.

In certain embodiments, one or more of the layers **64** are fitted to the real-world arrangement of a portion of the user interface device **10.** An example includes the Input element layer **68** being fitted to keys of a keyboard and the body layer 72 fitted to the periphery of a keyboard.

In embodiments, the instructions may include or transition one or more of the layers **64** based on a trigger. "Transition" may refer to changing the representation of one or more layer from a first representation to a second representation (e.g. in the instance of the indicia layer **66** a first representation may include the indicia as alphanumeric and other symbols as shown in figure 14 and the second state may include the indicia as emoji as shown in figure 15). In certain embodiments, the trigger can include one or more of the following (which may be determined by the processor **26, 34**)**.**
- A configuration of the user interface device **10,** which may include determination of a type of user interface device **10.** The type of the user interface device **10** may be determined by identification of the user interface device **10** as discussed previously. The type of the user interface device **10** may relate to the form factor of said device.
- An arrangement of the user interface device **10,** which may include a location of the user interface device **10,** examples of locations include the arrangement of the user interface device **10** on a work surface (e.g. a keyboard) or held by the user (e.g. a game controller). Arrangement may include the real-world arrangement of the user interface device **10,** including an orientation of the device. The orientation may be relative a reference point (e.g. the HDM **8** or other element of the user), examples include an orientation of the device which may be defined by an alignment of a longitudinal axis of the user interface device **10** (e.g. aligned vertically or pointing away from the user).
- A proximity of an object associated with the system **2.** Proximity may be with reference to the user interfaced device **10,** e.g. the proximity of the object to the said device **10** (which may be determined using the sensor system **12** arranged on the user interface device **10).** The object may be as previously defined. Proximity may include the previously defined proximal field. An example includes the user interface device **10** arranged in operative proximity an object arranged as an interoperable user interface device, wherein input element functionally its transferred/shared between the devices.
- A contextual event, which may be related to the virtual reality environment (e.g. a particular stage in a VR game) or other computer implemented notification including the receipt of a message or email). A contextual event may also include the environmental media **77.**
- A user interaction with the system, which may include a gesture that may be made by fingers/hand. The gesture may include a characteristic movement of the hand, including a hand swipe or finger moment (e.g. to press an input element). The gesture may include a characteristic shape made by the hand, such as natural hand movements for grasping, pointing, pulling apart, etc. An example of a gesture includes a moving their finger to make a selection of an input element **44** of the user interface device **10.** In other embodiments, the user interaction includes input determined from the I/O system **38** of the user interface device **10** via the user interfacing with of one or more of the input elements **44.**
- User configured, which may include the user configuring the configuration of one or more of the layers **64** and/or their transition.

Inclusion and transition of the one or more of the layers **64** in the instructions based on a trigger will now be exemplified for the various triggers defined above.

In certain embodiments, modification or generation of one or more of the layers **64** may be triggered based on the user interface device **10** being identified, e.g. as a game controller or keyboard or other user interface device. One or more of the indicia layer **66,** input element layer **68,** feedback layer **70,** device body layer **72** may be configured to overlay the real-world device.

In certain embodiments, instructions for one or more of the layers **64** may be triggered based on the user interface device **10** determined as arranged on a work surface, e.g. the proximal layer **74** is arranged to represent the work surface, as previously discussed.

In certain embodiments, for a keyboard **10** (or other user interface device) determined as transitioned from abutment with a work surface to being held by a user, the instructors for the one or more of the indicia layer **66,** may be accordingly transitioned (e.g. to represent input elements **44** with reduced functionality) since a user may be unable to use both hands to type.

In certain embodiments, instructions for one or more of the layers **64** may be triggered based on the other user objects **56** determined as in the proximal field the user interface device **10** (e.g. by the previously described sensor system **12** arranged on the user interface device **10).** In certain embodiments, wherein the objects **56** are interoperable user interface devices, one or more of the indicia layer **66,** input element layer **68,** feedback layer **70** of the user device **10** may be transitioned as input function is transferred to/from the interoperable user interface devices, e.g. a joystick wheel is arranged proximal the keyboard, wherein the keyboard transfers/shares functionality of the cursor keys to the stick).

In certain embodiments, the proximal layer **74** is transitioned to represent objects **56** therein. In an embodiment one or more of the objects **56** are represented by layers **64** as defined herein in a similar manner as for the user interface device **10.**

In certain embodiments, the virtual reality environment or notification that requires alphanumeric entry and one or more of the indicia layer **66,** input element layer **68,** feedback layer **70** (or other layer) is transitioned to represent input elements for said alphanumeric entry.

In certain embodiments, a gesture (e.g. a swipe) is used to transition the indicia layer **66** as alphanumeric and other symbols as shown in figure 14 to the indicia as emoji as shown in figure 15. It will be understood that various gestures may be used to transition of one or more of the layers **64** to various representations.

Referring to figure 17, process of interfacing a user with a computer, which may be implemented by the processor may include, at block **78,** selecting one or more layers from a plurality of different layers **64** to represent a physical user interface device **10** in graphical environment **42** of a virtual or augmented reality virtual reality environment. The process may include, at block **80,** generating instructions to display said one or more selected layers in the graphical environment **42.** At block **82,** the method may include determining a trigger and in response transitioning one or more of the layers included in the instructions.

### Peripheral-Centric Augmented Workstation Environment

In some embodiments, a peripheral-centric augmented reality workstation environment can be realized using an AR/VR system. Some systems, including some of those described above, may be configured to render an augmented reality workstation environment that is aligned relative to a user. For instance, some embodiments can render video content in an augmented reality or virtual reality environment based on a location of a user or an HMD (*see, e.g.,* FIG. ID). That is, virtual displays, virtual objects, and/or other AR/VR rendered virtual content can be rendered to appear to be located at certain positions when displayed to a user.

A peripheral-centric augmented reality workstation environment may be alternatively configured to distribute various content relative to a peripheral device (*e.g.,* keyboard, mouse, stylus, hub, etc.), rather than relative to an HMD. By way of example, some embodiments of an augmented reality workstation environment may be configured to determine a location of a physical peripheral input device (*e.g.,* keyboard) within a physical environment and determine, based on the location of the peripheral input device within the physical environment, a location and/or orientation of a virtual display (*e.g*., via an HMD) to render to a user of the peripheral input device. A virtual display can be separated and distinct from the corresponding peripheral input device. For example, a virtual "television" or other display can be rendered as appearing to be located on a wall or at a distance for a user of an peripheral input device. In some aspects, the orientation and/or location of the display can remain at a fixed, perceived spatial relationship with respect to the peripheral device as the peripheral device moves within the physical environment. For instance, if a user picks up the peripheral device from one location and moves it to a second location, the display may maintain its perceived fixed position relative to the peripheral device. Some displays may be "sticky," such that a small movement of a peripheral device (*e.g.,* resituating a keyboard by 20 cm on a surface) may not cause a display to move, but larger movements (*e.g.,* 3 m) may prompt the display to move in a fixed manner, as further discussed below.

Some embodiments may employ additional interactive displays that may also be rendered in locations relative to the peripheral device. These different types of displays can be rendered in different designated areas, or "zones" depending on their intended content and use. For instance, content that is intended to be interacted with by a user may be configured in a location that is easily accessible by the user *(e.g.,* on or near the peripheral device), while content that is typically only intended for viewing may be configured farther from the peripheral device at a preferable viewing distance. The following embodiments depict these aspects in further detail, and one of ordinary skill in the art would appreciate that any of the embodiments depicted and/or described throughout this document, or portions thereof, can be combined in any suitable manner, and accordingly any one embodiment should not be interpreted as a limiting combination of features.

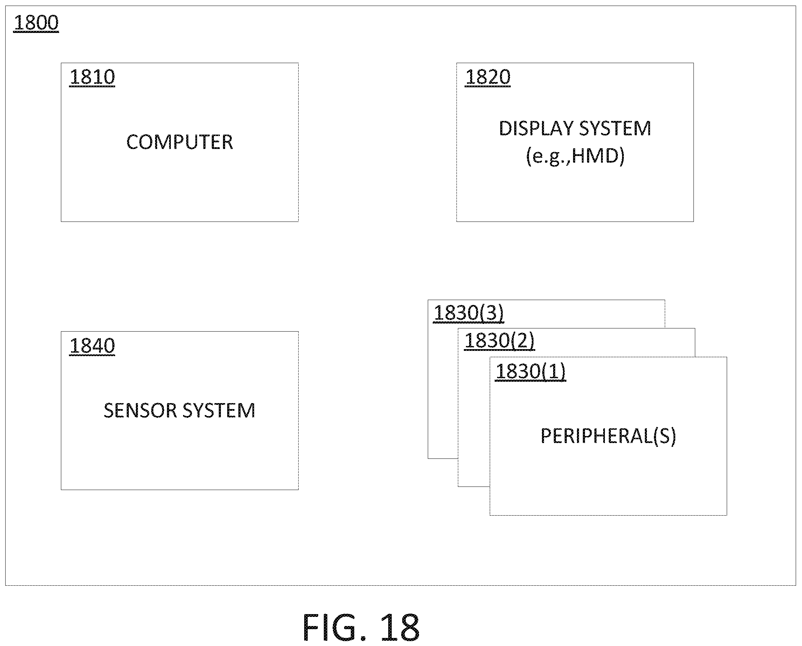

FIG. 18 shows a simplified diagram of a peripheral-centric augmented reality workstation environment (AWE) 1800, according to certain embodiments. AWE 1800 can include computing system 1810, display system 1820, sensor system 1840, and peripheral device(s) 1830(1-n). Computing system 1810 can be capable of providing an augmented/mixed/virtual reality environment to a user via display system 1820. Display system 1820 can be embodied as an HMD, virtual reality display, holographic imaging device, or other display capable of providing computer-rendered images to a user. The one or more peripheral devices 1830 (1-n) can be a physical user interface device configured to enable a user to interface with the augmented workstation environment facilitated by computer 1810. As indicated above, typically one of the peripheral devices 1830 can be used as a reference point to arrange one or more virtual displays to a user. Sensor system 1840 may sense and provide position and orientation information to computer 1810, including a location of the one or more peripheral devices, the user, body parts of the user (*e.g.,* location of head, hands, arms, etc.), physical characteristics of the physical environment around the one or more peripheral devices (e.g., location of surfaces, walls, objects, obstructions, etc.), and the like, as further described below.

Computer 1810 can include a host processor, which may include a microprocessor, multiple processors and/or co-processor chips, and/or digital signal processor (DSP) capability, or the like. A system clock (not shown) may be coupled to or part of host processor 30 to provide timing data. Computer 1810 may include an audio system including audio output devices to provide audio to a user, as would be appreciated by one of ordinary skill in the art with the benefit of this disclosure. Display system 1820 may display images of a simulation, game environment, operating system application or other images associated with the simulation. As shown in the forthcoming figures and corresponding description, display system 1820 can render images of an augmented workstation environment. Display system 1820 may be part of an HMD, forming/displaying the augmented workstation environment, or display system 1820 may be a separate secondary display device (*e.g.,* holographic display device) to allow configuration of the system by the user without needing to wear the HMD, or configuration of the system by any other person, or to allow a secondary non-VR display of the virtual reality environment, *e.g.,* for observational, run-time configurational, safety or any other purpose(s). Computer 1810 may include other known components, such as random access memory (RAM), read-only memory (ROM), and input/output (I/O) systems, and the like, as would be appreciated by one of ordinary skill in the art.

Computer 1810 may implement an application program, which may be a simulation program for generation of the augmented workstation environment. The user may interact with the program via peripherals 1830 (*e.g.,* keyboard, mouse, stylus, etc.). The application program may include multiple rendered displays arranged relative to a peripheral device to display an office productivity environment, a gaming environment, an interactive digital location *(e.g.,* home, virtual store, sporting arena, etc.), medical procedure simulation, computer-aided design applications, or other type of virtual arrangement of interfaces. The application program may comprise or access an external database, such as over a network. The application program may be implemented as one or more modules or other functional units. Herein, for simplicity, operating systems such as Windows^{™}, Android; IOS; MS-DOS, MacOS, Linux, etc., are also referred to as application programs as may be device drivers for hardware associated with the computer. Typically, the application program can be capable of providing instructions for the generation of a graphical environment on display system 1820. It may provide images to be displayed on display 6 of HMD 18 and may output other feedback, such as auditory or vibration (haptic) signals. The application program may be operable to check for input signals from peripherals 20 and provide the corresponding output. The application program may interface with the HMD 18 and/or other peripherals 20 via a device driver, whereby the device driver communicates with the device through electronic circuitry of I/O system 38.

Computer 1810 may be embodied in a personal computer, workstation, laptop or server, such as a PC compatible computer, Apple^{®} personal computer, smart device (e.g., smart phone, smart watch, etc.), a standalone HMD system, a tablet computer, or other suitable computing system. Computer 1810 may be operable under the Windows^{™}, MacOS^{™}, Unix^{™}, or MS-DOS^{™} operating system or the like.

In some embodiments, sensor system 1840 may include an object tracking system having a camera system, such as one of more of a: 2D camera; a 3D camera; an IR camera; a time of flight (ToF) camera, or the like, which may utilize CMOS, CCD, IR, or other suitable type of image sensors. Sensor system may further incorporate touch sensing capabilities, which may include capacitive-based and/or resistor-based touch sensors (FSR), or the like. Touch sensors generally comprise sensing elements suitable to detect a signal such as direct contact, electromagnetic or electrostatic fields, or a beam of electromagnetic radiation. Touch sensors can typically detect changes in a received signal, the presence of a signal, or the absence of a signal. A touch sensor may include a source for emitting the detected signal, or the signal may be generated by a secondary source. Touch sensors may be configured to detect the presence of an object at a distance from a reference zone or point (e.g., < 5 mm), contact with a reference zone or point, or a combination thereof. Further aspects of sensor system 1840 are further described below. Some examples of the types of touch/proximity sensors may include, but are not limited to, resistive sensors (e.g., standard air-gap 4-wire based, based on carbon loaded plastics which have different electrical characteristics depending on the pressure (FSR), interpolated FSR, etc.), capacitive sensors (e.g., surface capacitance, self-capacitance, mutual capacitance, etc.), optical sensors (e.g., infrared light barriers matrix, laser based diode coupled with photo-detectors that could measure the time of flight of the light path, etc.), acoustic sensors (e.g., piezo-buzzer coupled with microphones to detect the modification of a wave propagation pattern related to touch points, etc.), or the like.

Peripheral(s) 1830(1-n) can include a keyboard, computer mouse, audio devices (*e.g.,* speakers), stylus/touch devices, presenter devices, touch pads, camera-based devices (*e.g.,* a webcam), printers, or the like. The embodiments that follow describe the use of certain physical peripheral devices, however it should be understood that these examples are not intended to be limiting, and that one of ordinary skill in the art would appreciate how any suitable type or number of peripherals could be integrated into an augmented workstation environment, as shown and described.

Although certain systems may not expressly discussed, they should be considered as part of AWS 1800, as would be understood by one of ordinary skill in the art. For example, AWS 1800 may include a bus system to transfer power and/or data to and from the different systems therein. In some embodiments, AWS 1800 may include a storage subsystem (not shown). A storage subsystem can store one or more software programs to be executed by processors. It should be understood that "software" can refer to sequences of instructions that, when executed by processing unit(s) (*e.g.,* processors, processing devices, etc.), cause AWS 1800 to perform certain operations of software programs. The instructions can be stored as firmware residing in read only memory (ROM) and/or applications stored in media storage that can be read into memory for processing by processing devices. Software can be implemented as a single program or a collection of separate programs and can be stored in non-volatile storage and copied in whole or in-part to volatile working memory during program execution. From a storage subsystem, processing devices can retrieve program instructions to execute in order to execute various operations (*e.g.,* software-controlled spring auto-adjustment, etc.) as described herein.

### Display "Zones" Configured Relative to a Peripheral Device in an AWE

In some embodiments, one or more displays may be rendered in an augmented reality workstation environment using a physical peripheral device as a point of reference. For example, one or more rendered displays may be configured within different areas (referred to herein as "zones") positioned at locations relative to a particular peripheral device. As used herein, the zones may be physical areas that content rendered to a user of an augmented reality workstation may appear to be within. Some displays may be intended for visual data consumption and may be configured farther from the user, while other displays may be intended to provide interactive capabilities and are configured closer to the user *(e.g.,* on or adjacent to the physical peripheral device). The interactive zones may be positioned to enable a user to touch the interactive displays with a peripheral, appendage, etc. Some examples of the use of "zones" in an AWE are further described below.

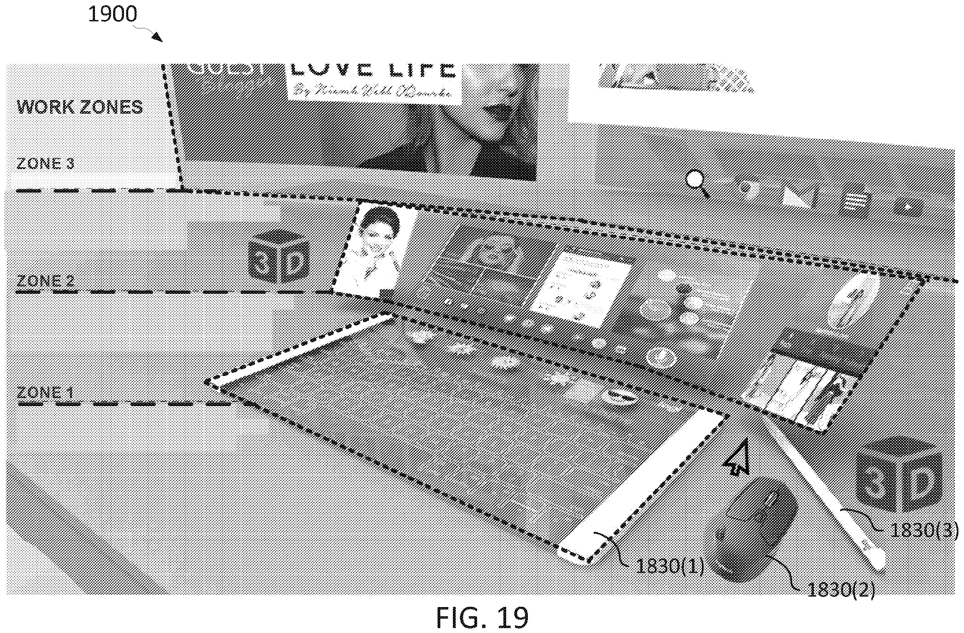

FIG. 19 shows an example of an augmented workstation environment 1900, according to certain embodiments. The AWE can include a number of displays of varying size and location depending on their intended use. Referring to FIG. 19, certain types of displays are rendered in areas defined as "zones" (e.g., "zone 1," "zone 2," "zone 3", ...), which are configured at locations relative to a physical peripheral device (*e.g.,* keyboard 1830(1)). The physical peripheral device that is used as a reference point will be referred to as the "reference peripheral." Each zone may be arranged in any suitable location and may be configured to span across any suitable area or volume within 3D space relative to the reference peripheral. In some cases, as the reference peripheral moves in real 3D space, the zones and corresponding visual content may move accordingly, relative to the reference peripheral. That is, each zone may be fixed to a set spatial relationship relative to the reference peripheral, such that the reference peripheral and the one or more displays rendered in zones 1-3 appear to move as a singular interconnected system. AWE 1900 may include some or all elements of AWE 1800, and certain examples provided herein may refer to both systems interchangeably.

In some embodiments, placing the reference peripheral on a surface may cause AWE 1900 to switch to a "wake" state and render the plurality of displays in zones 1-3 in HMD 1820. Placement detection can be achieved in any suitable manner including via a physical switch or sensor (*e.g.,* pressure sensor, IMU) on the reference peripheral. Alternatively or additionally, one or more sensors (*e.g.,* visual sensors, ultrasonic sensors, IR sensors, etc.) from sensor array 1840 may be used to determine when the reference peripheral is placed on a surface. Conversely, lifting the reference peripheral off of a surface may cause the AWE 1900 to switch to a "sleep" or shutdown state. In some cases, lifting and moving a short distance *(e.g.,* 30 cm) may not initiate a shutdown state, as further described below. In certain embodiments, in addition to the previously described "sleep" and shutdown states, a travel or other state change can occur. For example, entering a travel state may collapse or otherwise rearrange virtual displays presented to a user of AWE 1900. When the user enters an area wherein they can resume interacting with a virtual display using the peripheral input device, the virtual displays may return to a previous position. If, however, the user has entered a new environment, virtual display(s) may take a different position/orientations. For example, if a user moves from an office environment to a train, virtual displays may be minimized and/or superfluous virtual displays may be removed. Different states may be triggered depending on various criteria. For example, a peripheral device may be reconfigured (for example, a collapsible keyboard may be collapsed or a hand held peripheral may be lifted from a work surface). While in different state(s) different input sensors and/or input schemas may be used. For example, gestures may be relied upon more heavily while in a travel mode as opposed when working within an office.

Alternatively or additionally, different states may be triggered based on a proximity detection of a user (e.g., near the reference peripheral), detecting a user's hand's on the reference peripheral (or other peripheral device in AWE 1900), or the like. The sensing can be performed by one or more sensors (*e.g.,* vision-based, touch-based, ultra-sound, IR, audio-based, etc.) on the reference peripheral, secondary peripheral devices, computer 1810, display system 1820, or any combination thereof, as would be appreciated by one of ordinary skill in the art with the benefit of this disclosure. In some embodiments, the reference peripheral can include tracking features (*e.g.,* sensors, LEDs, fiducial mark(s)) for locating within a physical environment. For example, reference peripheral can be tracked from the HMD, from its own on-board sensors (*e.g.,* via IMU), or a combination thereof. Thus, state change conditions may be triggered automatically in response to reference peripheral 1830(1) detecting a user's presence, receiving user inputs, detecting placement on a suitable work surface (e.g., based on dimensions and nearby walls, obstructions, open space, etc.), or the like.

In some embodiments, "zone 1" may be associated with a region on *(e.g.,* overlaid) or near/adjacent to the reference peripheral (*e.g.,* keyboard 1830(1)), as shown in FIG. 19. Zone 1 can be associated with physical peripheral device(s) that a user may physically interact with. Physical peripheral device(s) within zone 1 may be augmented with virtual content. For example, keyboard 1830(1) may include a number of depressible keys but no printed insignia on each key. In some embodiments, a display system (*e.g.,* HMD) may overlay virtual alphanumeric characters over each key in any suitable language. In some cases, the overlay may be contextual such that the virtual alphanumeric layout may be a first set of rendered characters and numbers when accessing a first application (e.g., office productivity software), or a second set of rendered characters and numbers when accessing a second application (e.g., CAD software). Alternatively or additionally, different key layouts may be shown on the reference peripheral in response to a physical command (e.g., pressing a function key), or other trigger (e.g., voice command, a command generated on another peripheral device (e.g., mouse 1830(2), stylus 1830(3), etc.). In some aspects, other interactive symbols or non-interactive displays can be superimposed (overlaid) on reference peripheral 1830(1), including emojis, application shortcuts, or the like.

Certain embodiments may employ a physical touch sensitive surface (e.g., touch pad) to receive a user input. Some embodiments may include additional sensors in reference peripheral 1830(1) to detect the presence and/or location of other peripherals 1830(2-n) relative to reference peripheral 1830(1), or define a region within or adjacent to zone 1 that can be designated for receiving a user input (*e.g.,* movement of a finger or stylus along a surface adjacent to reference peripheral 1830(1). For instance, vision-based sensors can be used to detect when a user's hand moves within a particular location on a surface adjacent to keyboard 1830(1) *(e.g.,* a mini-zone adjacent to zone 1). Thus, a section of an otherwise inert surface *(e.g.,* a table top) may operate as a high precision touch sensitive and/or proximity sensing surface. Further, the designated touch area may maintain its spatial relationship (*e.g.,* remain fixed) with respect to reference peripheral 1830(1).

As mentioned above, one or more sensors coupled to reference peripheral 1830(1) can be used to track a location of one or more additional peripheral devices 1830(2-n), with reference peripheral 1830(1) operating as a point of reference. Thus, reference peripheral 1830(1) may operate as a central hub with its own dedicated tracking system. This may present certain advantages over systems that track multiple peripherals from a conventional HMD or lighthouse-based system. For example, the additional sensors may provide higher fidelity tracking than may be possible from HMD-tracking resources. In some cases, offloading the tracking of additional peripheral devices to the hub, and relaying that tracking information to the computer system 1810 and/or display system 1820 (e.g., to fuse both tracking coordinate systems) may relieve the computer system and/or display system 1820 or processing bandwidth. The reference peripheral input device may include features for determining the location of the physical peripheral input device within the physical environment by a tracking system and the tracking system can be used to determine an orientation of a physical display used to render the first virtual display. In some embodiments, the features can be selected from a list including a sensor, an emitter, and a marking. The sensor can be configured to detect or the emitter can be configured to emit: visible light, infrared light, ultrasound, magnetic fields, or radio waves. In some cases, the physical peripheral input device can include a plurality of the features to enable the physical peripheral input device to be tracked within the physical environment by any one of a plurality of tracking techniques. The physical peripheral input device may include an inertial measurement unit (IMU) and the location of the physical peripheral input device within the physical environment can be determined using the IMU. In certain embodiments, the orientation of the first virtual display can be determined based on a determined identity of the user of the physical peripheral input device and wherein the orientation of the first virtual display would be rendered differently for a differently identified user.

In some embodiments, "zone 2" may correspond to one or more areas adjacent to or near zone 1 that may be designated to render interactive display information within reach of the user. As shown in FIG. 19, zone 2 may include interactive tools and content such as tool alterations, mode changes, emoji, chat boxes, application launch buttons, etc. In some cases, the reference peripheral may include physical areas (*e.g.,* protruding surfaces) that may be dedicated for the projection of interactive displays. The physical areas with virtual interactive overlays may include dedicated physical switches, touch sensitive surfaces and areas with interactive haptics (e.g., over-air haptics, piezo-based haptics, etc.), sensors to track in-air movement above the reference peripheral, or the like, to further augment the user experience. Zone 2 may be configured on physical areas or in 3D space (as shown in FIG. 19) that is preferably within reach of a user that is accessing reference peripheral 1830(1). Zone 2 may be configured on the same plane as reference peripheral 1830(1) or a different plane (as shown). Zone 2 may be a volumetric space, as opposed to a planar region, and can be configured in any suitable manner. In some cases, the boundaries defining the one or more zones can be customized by a user, auto-arranged by AWE 1900 *(e.g.,* based on the visual content), set at a default size and location, or a combination thereof. Typically, zone 2 (and zone 1 in some instances) include a collection of interactable elements that can be interfaced via a user's hands, gaze, voice, a cursor, or the like, and may include drag-and-drop functionality (*e.g.,* locally and with other zones), haptics, touch detection capabilities (e.g,. via a dedicated physical dock or designated sensed area), or the like.

In some embodiments, "zone 3" may correspond to one or more regions designated for visual consumption that may not require user interaction, similar to a physical monitor in some workstation environments. Referring to FIG. 19, zone 3 includes a number of displays distributed along its defined region. Zone 3 may extend laterally in an arc for a wrap-around visual environment, which can be ergonomically beneficial for the user. In some cases, zone 3 may be a volumetric space to allow content to be moved closer or further back from the user. For example, AWS 1900 may detect when a user moves their head closer to the virtual displays and cause displayed content in zone 3 to move closer to the user, which can effectively reduce the distance that the user has to move forward. Alternative or additionally, detecting that the user (e.g., HMD) is moving closer to zone 3 may cause content in zone 3 to auto zoom at a proportional amount relative to the HMD movement. In some cases, the user may be simply moving their seat closer or farther form the reference peripheral (thus, moving the HMD a similar distance), which may cause AWE 1900 to move content in zone 3 (or from other zones) closer or farther to maintain a viewing distance. Note that in such cases, the zones are still projected relative to the reference peripheral and not the HMD, however the HMD may be a factor is determining where to position the one or more zones for an improved viewing experience. Zone 3 can typically include multiple displays distributed thereon, interactive 2D and 3D displays/objects, interaction via gaze, cursor, voice, and the like.

In some embodiments, a "zone 4" may be defined as an area (e.g., plane or volumetric area) to share virtual content to make for a collaborative environment between users. For example, each user may have their own reference peripheral (e.g., keyboard) and corresponding zones 1-3, however a zone 4 may be shared by all. Users may select and move content to and from zone 4 using a mouse, stylus, or other interactive peripheral device.

The location of zones may be determined by computer 1810, by reference peripheral 1830(1), by display system 1820, or a combination thereof using sensor resources from any resource of AWE 1800. For example, reference peripheral 1830(1) may utilize on-board sensor or leverage sensor resources from computer 1810 and/or display system 1820 to poll its environment and determine where boundaries, open areas, surfaces, and obstructions are located, for instance. In some cases, content presented to the user via the rendered interactive virtual display can be selectable by the user to modify an operation corresponding to use of the physical peripheral input device by the user, and where the interactive virtual display can be rendered to appear to the user to be in proximity to the physical peripheral device. The operation corresponding to use of the physical peripheral input device by the user may include changing a command corresponding to actuation of an input element of the physical peripheral input device, changing an appearance of the physical peripheral input device, an appearance of an input element of the physical peripheral input device, and/or changing a relationship between one or more rendered virtual displays and the physical peripheral input device. In some cases, the orientation of the interactive virtual display can be rendered to appear to the user to be at a location that is integrated on or within a periphery of the physical peripheral input device, or the interactive virtual display can be rendered to appear to the user to be located on an area of the physical peripheral input device including features that supplement functionality provided by the interactive virtual display. In some embodiments, the features may include haptic feedback generated by a haptic feedback generator integrated within the physical peripheral input device to provide haptic feedback in response to user interaction with the interactive virtual display. The features can include a physical input element and where the content of the interactive virtual display is rendered to appear to the user to be selectable by the user by actuation of the physical input element. The interactive virtual display can be rendered to appear to the user to be located in an area in proximity to the physical peripheral input device. The content can be determined to be selected by the user, without physically contacting the physical peripheral input device, by a sensor of the physical peripheral input device. In some cases, content presented to the user via a rendered display can be selectable by the user of the second physical peripheral input device to modify an operation to use of the second physical peripheral input device by the user of the second physical peripheral input device, and the second interactive virtual display can be rendered to appear to the user of the second physical peripheral input device to be in proximity to the second physical peripheral input device. In certain embodiments, the interactive virtual display can be rendered to appear to the user to be at a spatial location determined, at least in part, based on a biomechanical model of the user to enable the user to reach the interactive display with an appendage

### Environment Detection and User Profiles

In some embodiments, AWE 1900 may auto-adapt to various usage scenarios and/or media content. For example, upon detection that the reference peripheral is placed on a desk, a 3 zone, 3 monitor mode of operation may be rendered, as shown for example in FIG. 19. In another example, a user may place the reference peripheral on a small surface in close quarters, such as on a seat tray on an airplane or in a coffee shop. In these cases, zones may be configured such that the user is not looking directly at other people in the same line-of-site, visually distributed within a smaller radius relative to the reference peripheral, change the number of zones, limit the size of content, or the like. For instance, in the coffee shop example, zones 1 and 2 may remain relatively unchanged, however zone 3 may be directed downward, limited to a smaller area, and orientated at a different viewing angle relative to the reference peripheral. The sensing of the surrounding physical environment can be performed by one or more sensors (e.g., vision-based, touch-based, ultra-sound, IR, etc.) on the reference peripheral (e.g., operating as a hub, as further described below), secondary peripheral devices (non-reference peripherals), computer 1810, display system 1820, or any combination thereof, as would be appreciated by one of ordinary skill in the art with the benefit of this disclosure.

In some embodiments, a user profile may be configured for each user, which may include content display locations, control schemas, and the like. For example, a first user may be relatively short and each zone can be configured in a location that is ergonomically beneficial to that user's relative size. Zone 2 may be positioned closer to the reference peripheral to accommodate the user's corresponding biomechanical range. Likewise, a second user that is relatively tall may have a user profile that accommodates that user's relative size. In some cases, a user profile may arrange one or more zones for a particular environment, as described above. A first user may have a first profile for office use (*e.g.,* large surface area with far walls) and a second profile for working on a bus (*e.g.,* close quarters and downward facing viewing area). Thus, user preferences and/or the work environment (*e.g*., wall location, lighting, proximity of other people, etc.) may be used to establish different working profiles to better optimize the augmented workstation environment. In some embodiments, aspects of AWE 1900 can detect a position/location of the user relative to reference peripheral 1830(1) and may identify zones for human ergonomic envelopes (e.g., head movement) that may have a different response to certain content. For instance, content may snap into ideal zones, or a wireframe outlines may be superimposed on an area/volume to highlight an ergonomically preferred configuration different from a current arrangement of zones. In some cases, zone placement may be user defined. For instance, a series of questions and/or displayed arrangements may be presented to a user to make decisions on how zones will be displayed, what content will be included in each zone, how zones can affect one another (e.g., whether or not content may be moved freely from one zone to the next), how to arrange zones in certain work environments, etc., enabling/disabling interactive controls based on applications (e.g., word processing may disable object manipulation controls, as one might use in a CAD tool). A user may determine how zones are shared between users and what privacy policies to apply. One of ordinary skill in the art with the benefit of this disclosure would appreciate the many variations, modifications, and alternative embodiments.

Reference peripheral 1830(1) and/or peripheral devices 1830(2-n) can include one or more controls for interacting with interactive content, including but not limited to depth wheels, touch sensors, buttons/switches, in-air use, etc., which may adaptively change their functions depending on the zone that the user is interacting with. For example, in response to a user moving their gaze from zone 1 to zone 3 (*e.g.,* detected by HMD), a cursor may snap from zone 1 to zone 3 and change one or more control functions (*e.g*., functions assigned to a button, scroll wheel, etc.) based on the type of content configured thereon (*e.g*., interactive media, viewing-only media, etc).

In certain embodiments, content may change when moved between zones. For example, content displayed in zone 2 that may be configurable and interactive may become only viewable when moved to zone 3.

### "Sticky" Zones and Expanding/Collapsing Zones and in an AWE

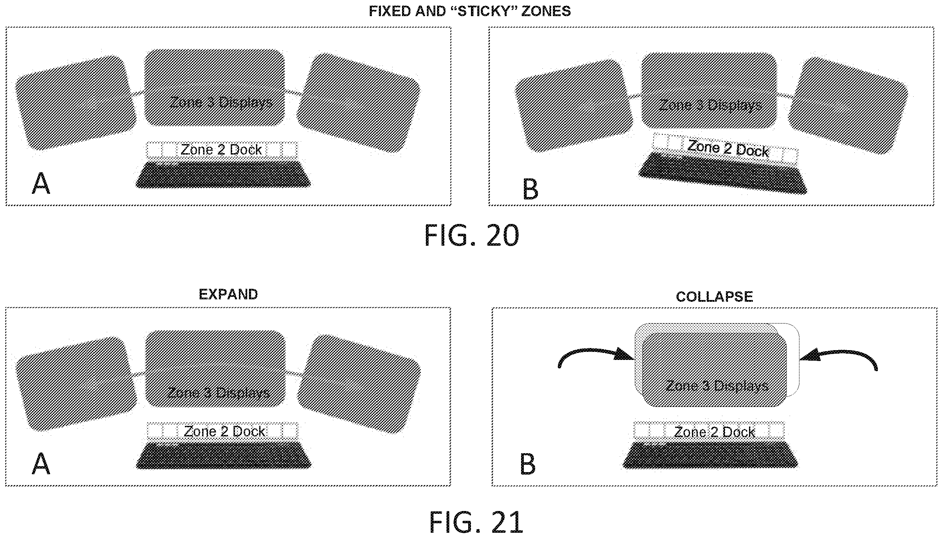

FIG. 20 shows how content zones may track with respect to a reference peripheral, according to certain embodiments. As described above, each zone in an AWE may be arranged in any suitable location and may be configured to span across any suitable area or volume within 3D space relative to the reference peripheral. In some cases, as the reference peripheral moves in real 3D space, the zones and corresponding visual content may move accordingly, relative to the reference peripheral. That is, each zone may be fixed to a set spatial relationship relative to the reference peripheral, such that the reference peripheral and the one or more displays rendered in zones 1-3 appear to move as a singular interconnected system. However, some embodiments may employ a "sticky" spatial relationship the generally tracks the movement of the reference peripheral, but not necessarily for every type of movement. That is, instead of tracking directly with the peripheral device, there can be a threshold area/distance that the peripheral device can be moved without certain content moving in proportion. For example, consumption displays configured in zone 3 may remain unmoved when a corresponding reference peripheral is moved below a threshold distance (e.g., 30 cm radius), rather than moved in a fixed arrangement as described above. In another example, a user may want to move a reference peripheral out of the way to create an open space on a surface immediately in front of the user to use as an interactive surface to touch or write on (e.g., via a stylus).

Referring to FIG. 20, window A shows an AWE with an interactive dock in zone 2 and three virtual displays rendered in zone 3. As the reference peripheral is moved within a threshold distance (e.g., within a volumetric area), the displays in zone 3 remain unmoved. This may be useful when a user may resituate their peripheral devices to a better location on a desk, on their lap, where the reference peripheral is moved to accommodate more peripheral devices in a limited space, or the like. Any of zones 1-3 (and shared zones, e.g., zone 4) can be configured to have a "sticky" spatial relationship with the reference peripheral, as would be appreciated by one of ordinary skill in the art with the benefit of this disclosure.

In some embodiments, the state of one or more displays configured on any of zones 1-3 can be stored and collapsed into a more compact arrangement. This may be useful when a user moves the reference peripheral from one location to the next, but does not necessarily want to power down the AWE, or the user may be confined to smaller quarters and cannot expand and number of displays beyond a limited area. For example, referring to FIG. 21, window A shows an AWE with an interactive dock in zone 2 and three virtual displays rendered in zone 3. In response to the reference peripheral being lifted, the displays may collapse into an interactive stack, as shown in window B. Conversely, when the reference peripheral moves back to a suitably sized surface (or other approved location), the displays may expand back to their original saved configuration. Any suitable trigger may be used to cause the expansion and/or collapse of the AWE including lifting the reference peripheral, selecting a "collapse/expand" function within the AWE, or other method. Further, any arrangement of collapsed screens from any zone can be configured and customized to preference. Some embodiments may cause one or more rendered displays to collapse to a larger or smaller area than shown in FIG. 21. The extent to which a number of displays may be collapsed may further depend on the detected physical environment (e.g., location of walls, obstructions, other people/devices, etc.) In some cases, the collapsed displays may still be accessible. For example, when collapsed, displays originally configured in zone 3 may be moved closer to the user for easier access, so the user can flip between displays (e.g., via suitable gesture, such as swiping), interact with content, or the like. One of ordinary skill in the art with the benefit of this disclosure would appreciate the many variations, modifications, and alternative embodiments thereof.

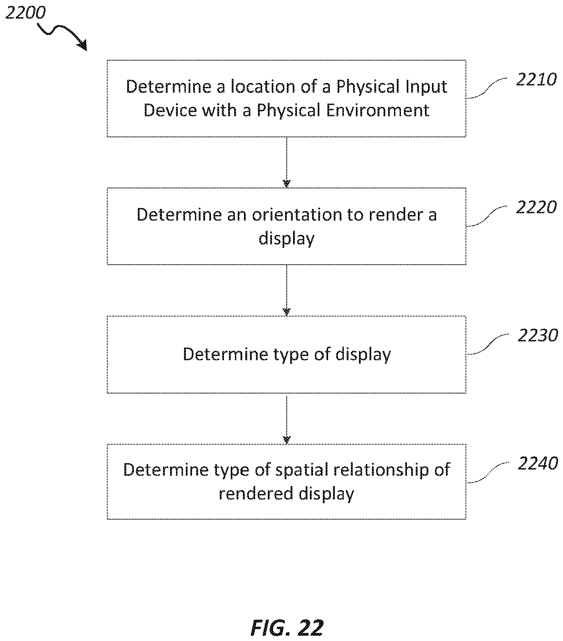

FIG. 22 is a simplified flow chart showing aspects of a method 2200 for operating an augmented workstation environment, according to certain embodiments. Method 2200 can be performed by processing logic that may comprise hardware (circuitry, dedicated logic, etc.), software operating on appropriate hardware (such as a general purpose computing system or a dedicated machine), firmware (embedded software), or any combination thereof. In certain embodiments, method 2200 can be performed by aspects of computer 1810, reference peripheral 1830(1), display system 1820, or a combination thereof.

At step 2210, method 2200 can include determining a location of a physical peripheral input device (e.g., reference peripheral) within a physical environment, according to certain embodiments. The location of the reference peripheral can be determined using any resource of sensor system 1840, which may include one or more sensors of reference peripheral 1830(1), display system 1820, computer 1810, or any combination thereof.

At step 2220, method 2200 can include determining, based on the location of the reference peripheral within the physical environment, an orientation of a display to render to a user of the reference peripheral, wherein content presented to the user via the rendered display can be modifiable by the user via the reference peripheral. The orientation of the display may refer to the direction the rendered display faces relative to the reference peripheral, the distance the display is configured relative to the reference peripheral, or a combination thereof.

At step 2230, method 2200 can include determining a type of the rendered display, according to certain embodiments. For example, the display may be configured for viewing content (e.g., zone 3), interactive content (e.g., zones 1-2), or the like. In some cases, the type of the display may affect the orientation/location of the display.

At step 2240, method 2200 can include determining a type of spatial relationship of the rendered display, according to certain embodiments. For example, the spatial relationship may be fixed (e.g., the distance of the display relative to the reference peripheral does not change when the reference peripheral is moved), or may employ "sticky" displays that move relative to the reference peripheral for movement greater than a threshold value (e.g, 30 cm). Any suitable threshold value can be used (e.g., 1cm - 5m), as would be appreciated by one of ordinary skill in the art. In some embodiments, the reference peripheral can be a keyboard, hub (as further described below), or other suitable physical peripheral input device.

It should be appreciated that the specific steps illustrated in FIG. 22 provide a particular method 2200 for operating an augmented workstation environment, according to certain embodiments. Other sequences of steps may also be performed according to alternative embodiments. Furthermore, additional steps may be added or removed depending on the particular applications. For example, some embodiments may only include method steps 2210-2220. Any combination of changes can be used and one of ordinary skill in the art with the benefit of this disclosure would understand the many variations, modifications, and alternative embodiments thereof.

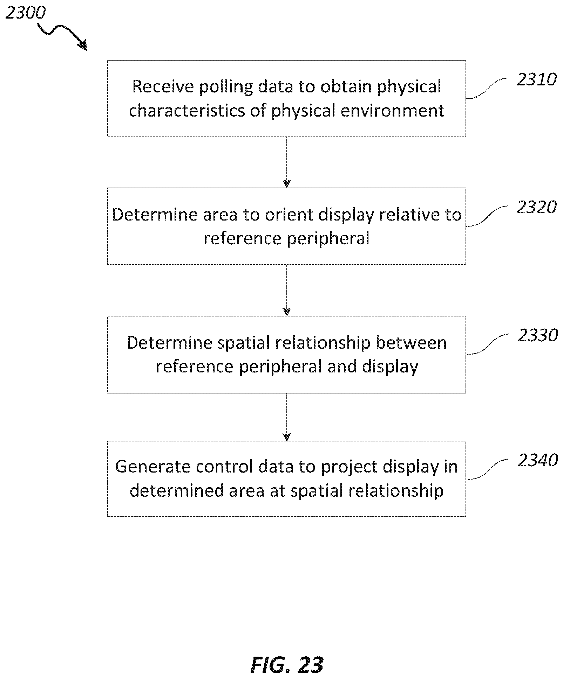

FIG. 23 is a simplified flow chart showing aspects of a method 2300 for operating a peripheral device (e.g., reference peripheral) in an augmented workstation environment, according to certain embodiments. Method 2300 can be performed by processing logic that may comprise hardware (circuitry, dedicated logic, etc.), software operating on appropriate hardware (such as a general purpose computing system or a dedicated machine), firmware (embedded software), or any combination thereof. In certain embodiments, method 2300 can be performed by aspects of computer 1810, reference peripheral 1830(1), display system 1820, or a combination thereof.

At step 2310, method 2300 can include receiving polling data from one or more sensors (e.g., any of sensors from sensor system 1840), according to certain embodiments. The polling data can correspond to physical characteristics of a physical environment around the reference peripheral. For example, the polling data may indicate where walls, obstructions, other peripheral devices, other user and/or objects are located relative to the reference peripheral.

At step 2320, method 2300 can include determining an area to orient a virtual display relative to the reference peripheral within the physical environment based on the physical characteristics. For example, in areas with close walls or limited space, the virtual display may be displayed closer to the user and over a relatively small area, as compared to an expansive area with a large amount of space. In some embodiments, the virtual display can be configured within zone 3.

At step 2330, method 2300 can include determining a spatial relationship between the reference peripheral and the projected virtual display, according to certain embodiments. For example, the spatial relationship may correspond to a fix positional relationship between the reference peripheral and the virtual display.

At step 2340, method 2300 can include generating control data configured to cause an AR/VR-based head-mounted display (HMD) to project the virtual display in the determined area at a maintained spatial relationship between the peripheral device and the projected virtual display as the peripheral device is moved within the physical environment, as further described above with respect to FIGS. 18-22.

In some embodiments, method 2300 can include detecting that the peripheral device is placed on a surface or interfaced by a user, where receiving the polling data from the one or more sensors may occur in response to detecting that the peripheral device is placed on the surface or interfaced by the user. In some cases, method 2300 may include determining that the peripheral device is lifted off of the surface, and generating second control data to cause the HMD to change the spatial relationship between the peripheral device and the projected virtual display such that a volumetric area occupied by the peripheral device and the projected virtual display is reduced. For instance, this may correspond to zone 1 and/or zone 2, as further described above with respect to FIGS. 19-21. Method 2300 can further include determining a second area to orient a virtual interactive display relative to the reference peripheral, where the interactive display is configured to facilitate an augmentation of functional capabilities of the reference peripheral. In some cases, method 2300 further includes determining a spatial relationship between the peripheral device and the projected interactive display, where the control data is further configured to cause the HMD to project the interactive display in the determined second area and at a maintained spatial relationship between the peripheral device and the projected interactive display as the peripheral device is moved in the physical environment.

In some embodiments, the control data may cause the spatial relationship between the peripheral device and the virtual display to be maintained such that a movement of the peripheral device that is within a threshold distance from an initial location of the peripheral device does not cause the virtual display to move. The control data may further cause the spatial relationship between the peripheral device and the virtual display to be maintained such that a movement of the peripheral device that is greater than the threshold distance from the initial location of the peripheral device causes the spatial relationship between the peripheral device and the projected interactive display to be fixed, where the spatial relationship between the peripheral device and the projected interactive display is fixed as the peripheral device is moved in the physical environment.

In further embodiments, method 2300 can include determining a third area on the reference peripheral to orient a virtual overlay (e.g., on zone 1), where the virtual overlay may be configured to further facilitate the augmentation of the functional capabilities of the peripheral device. Method 2300 can further include determining a spatial relationship between the peripheral device and the projected virtual overlay, where the control data is further configured to cause the HMD to project the virtual overlay in the determined third area and at a maintained spatial relationship between the peripheral device and the projected interactive display as the peripheral device is moved in the physical environment.

It should be appreciated that the specific steps illustrated in FIG. 23 provide a particular method 2300 for operating an augmented workstation environment, according to certain embodiments. Other sequences of steps may also be performed according to alternative embodiments. Furthermore, additional steps may be added or removed depending on the particular applications. Any combination of changes can be used and one of ordinary skill in the art with the benefit of this disclosure would understand the many variations, modifications, and alternative embodiments thereof.

### Peripheral-Centric Augmented Workstation Environment Using a Reference Hub

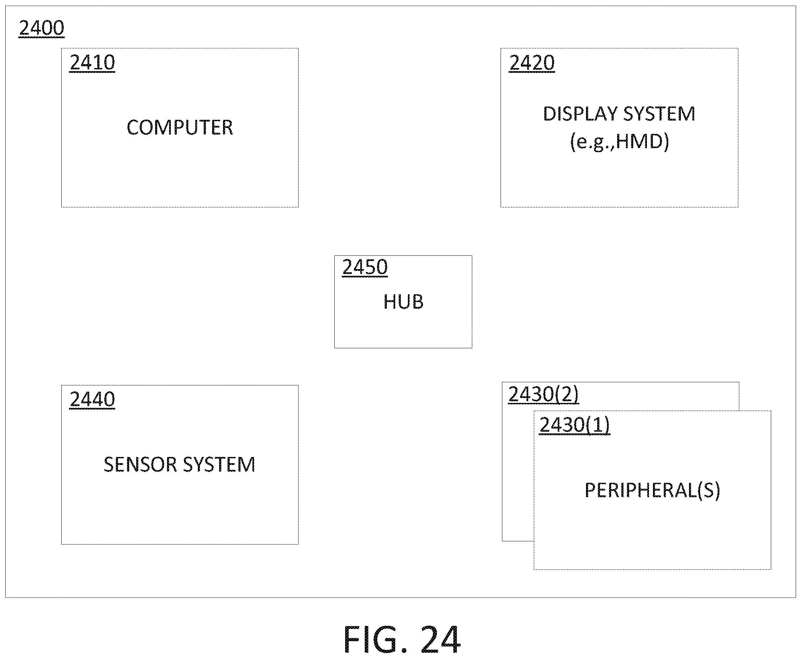

According to the invention, a reference hub ("hub") 2450 is configured within an AWE 2400 to interact with peripheral input device(s), 2430(1-n), display system 2420, computer 2410, and sensor system 2440, as shown in system 2400 of FIG. 24. Each of computer 2410, display system 2420, sensor system 2440 and peripherals 2430(1-n) may operate similarly to their matching counterparts as shown and described with respect to FIG. 18. As indicated above, sensor system 2440 may be a combination of sensor systems that utilize sensing capabilities of display system 2420, peripherals 2430(1-n), and hub 2450. Hub 2450 performs some or all of the following functions including tracking a location of some or all of peripherals 2430(1-n) in a physical environment using an independent tracking system, provide enhanced sensing capabilities for high fidelity sensing/tracking of interactions using peripherals 2430(1-n), operating as a single communication conduit for receiving data communications from some or all of peripherals 2430(1-n) and relaying said data to computer 2410, display system 2420, or both. Conversely, hub 2450 operates as a single data conduit to relay communications/control signals from computer 2410 and/or display system 2420 to the one or more peripherals 2430(1-n). Further, hub 2450 is configured to detect an area around one or more peripherals using an array of on-board sensors to establish zones for content placement in an augmented workstation environment, similar to the reference peripheral as described above with respect to FIGS. 18-13. Each of these functions are further described below. It should be understood that but for the inclusion of hub 2450 and its corresponding functionality described herein, computer 2410, display system 2420, sensor system 2440, and peripherals 2430(1-n) may operate similarly as described above with respect to FIG. 18 and alternatively, one of ordinary skill in the art with the benefit of this disclosure would understand the many variations, modifications, and alternative embodiments thereof.

According to the present invention, display system 2420 (*e.g.,* an HMD, holographic imaging system, augmented reality display, etc.) tracks its location using a first tracking system, as would be appreciated by one of ordinary skill in the art. Hub 2450 incorporates a second independent tracking system (*e.g*., visual tracking, IR, ultrasonic, EM, etc.) to track a location of some or all of peripherals 2430(1-n) in a physical environment relative to hub 2450. In some cases, hub 2450 may operate as a reference point of origin (*e.g.,* a 000 location in a Cartesian-coordinate based system) for tracking peripherals 2430 using the second tracking system. The tracked locations of peripherals 2430(1-n) using the second tracking system of hub 2450 can be combined with (*e.g.*, fused with) the first tracking system of display system 2420/computer 2410.

Additionally, hub 2450 tracks its own location using on-board sensing resources, which can be relayed and combined with the first tracking system. In some cases, hub 2450 may include features (*e.g*., sensors, LEDs, fiducial mark(s)) for detecting the location of the hub by the first tracking system. There are certain advantages to using two tracking systems. For example, the first tracking system may be limited in terms of accuracy or processing bandwidth such that tracking multiple peripherals may produce poor tracking results and/or may slow down system operations, and the first tracking system may not be accessible or manipulable (*e.g.,* a third party HMD unit) to track peripheral devices in the manner proscribed herein. Other advantages of using a second tracking system are further addressed in the implementations described below.

In some embodiments, hub 2450 may provide enhanced sensing capabilities for high-fidelity sensing and/or tracking of interactions using peripherals 2430(1-n). Some examples of high-fidelity sensing may include fine precision movements of a user's hand or finger along a touch pad or other sensed region, a movement of a stylus on or near a peripheral, or the like. For example, a small volumetric region adjacent to a peripheral device (*e.g.,* see "zone 2" description above) may include a sensed region that can detect a movement and articulation of a hand or stylus in high fidelity. This capability may not be present in standard display system sensing suites (first tracking system), and typically not with high fidelity particular to a designated region in a physical environment. Thus, high precision tracking/sensing can be performed by one or more peripherals 2430 and/or hub 2450 using a second tracking/sensor system (*e.g*., with hub 2450 as the center reference) that may be relayed to and integrated with the first tracking system of display system 2420.

In certain embodiments, hub 2450 can operate as a single communication conduit for receiving data communications from some or all of peripherals 2430(1-n) and relaying said data to computer 2410, display system 2420, or both, and vice versa as described above. Hub 2450 can interact (e.g., communicate with, transfer data to/from, share sensor/tracking data, etc.) with each of peripheral devices(1-n) using separate communication links (*e.g*., Bluetooth^{®}, Wi-Fi, IR, ZigBee, Z-Wave, RF, etc.) and coalesce information from peripheral devices 2430 to display system 2420 using a single communication link. Thus, significant processing bandwidth may be saved as display system 2420 can communicate with one entity (hub 2450) instead of independently communicating with multiple peripheral devices 2430. In some implementations, hub 2450 can provide capabilities of each peripheral device to display system 2420 including the type of peripheral (*e.g*., a keyboard, mouse, stylus), visual representation information (e.g., how the peripheral or augmented capabilities of the peripheral may be rendered), and the like. That is, hub 2450 may provide rendering information for each peripheral device with pre-render data corresponding to an image of the peripheral, which can then be provided to and imported by display system 2420 without further processing.

In some embodiments, hub 2450 may be a standalone unit, or a part of another device including a peripheral (*e.g.,* keyboard, mouse, stylus), a smart device (*e.g.,* phone, watch), a dedicated mini "tower" or the like. Hub 2450 may work across different platforms (e.g., HMD's, Phones, PC's), being agnostic, adapting to various platforms, or mediating and exchanging data between platforms. Hub 2450 may be configured to communicate with a variety of operating systems including, but not limited to, Windows^{™}, Android; IOS; MS-DOS, MacOS, Unix, Linux, etc. In some cases, multiple hubs may be used together to improve tracking precision.

In certain implementation, hub 2450 can operate as a point of reference to detect physical characteristics of a physical environment and determine locations to define operating "zones," similar to a reference peripheral as further discussed above with respect to FIGS. 19-24. In such cases, zones may be highlighted using lighting on hub 2450, or other peripherals, to indicated when a peripheral is placed in a tracking zone or not (*e.g.,* for high precision sensing regions, as described above). In some cases, hub 2450 can output indicia of whether a peripheral is in a designated zone or outline zones for the user (*e.g.,* project a box around zone 1, etc.). Further, Hub 2450 may be configured to detect and locate peripheral input device(s) and, based on the detected peripheral device(s), relay corresponding data between the detected peripheral device(s) 2430(1-n) and display system 2420 and/or computer 2410. Hub 2450 is operable to determine its location (detected from display system 2420 or on-board sensing resources) and other peripherals or interactions with said peripherals with greater accuracy than provided by display system 2420. In some cases, hub 2450 can include a transceiver configured to communicate with a display system for presenting a virtual reality or augmented reality virtual reality environment to a user, a tracking subsystem configured to sense a location of a physical peripheral input device within a physical environment, and one or more processors coupled to the transceiver and the tracking subsystem, the one or more processors configured to determine, via the tracking subsystem, the location of the physical peripheral input device within the physical environment, and transmit, via the transceiver, to the display system, the location of the physical peripheral input device within the physical environment. In some cases, the tracking subsystem can sense the location of the physical peripheral input device using a technique different from a technique used by the display system to track a location of the user or a head mounted display (HMD) worn by the user. The technique used by the tracking subsystem to track the physical peripheral input device and the technique used by the display system to track the location of the user or the HMD may be each selected from a list comprising: an ultrasonic emitter; an ultrasonic receiver; a visible light optical sensor; a visible light optical emitter; a non-visible light optical sensor; a non-visible light optical emitter; a magnetic field generator; a magnetic field sensor; a radio wave emitter; and a radio wave receiver. In some cases, the hub device can further comprising features for determining the location of the device within the physical environment by a system used to track a location of the user or a head mounted display (MHD) worn by the user. The features may be selected from a list including: a sensor; an emitter; and a marking, for example. The sensor can be configured to detect or the emitter is configured to emit: visible light, infrared light, ultrasound, magnetic fields, or radio waves.

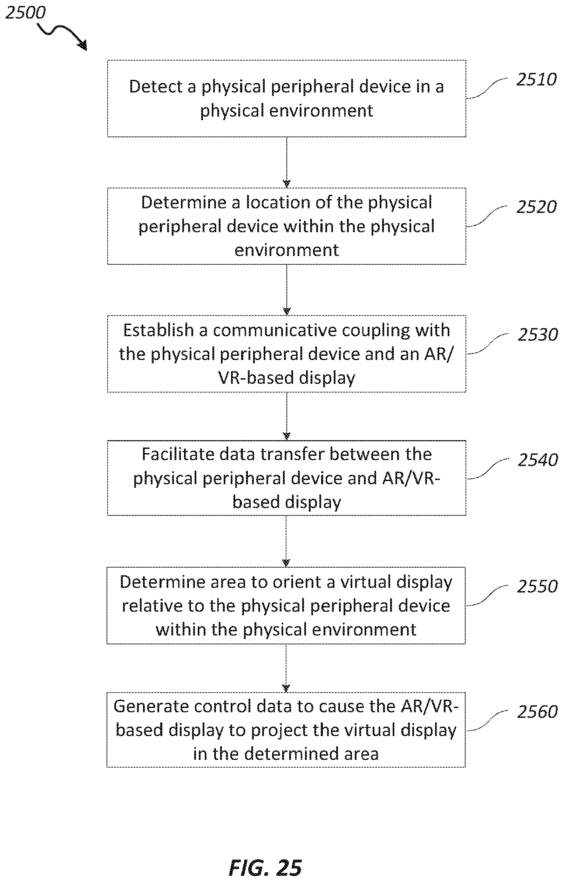

FIG. 25 is a simplified flow chart showing aspects of a method 2500 for operating a hub to interact with one or more peripheral devices within an AR/VR workstation environment, according to the invention. Method 2500 can be performed by processing logic that may comprise hardware (circuitry, dedicated logic, etc.), software operating on appropriate hardware (such as a general purpose computing system or a dedicated machine), firmware (embedded software), or any combination thereof. In certain embodiments, method 2500 can be performed by aspects of hub 2450, computer 2410, display system 1820, or a combination thereof.

At step 2510, method 2500 can include detecting a physical peripheral device within a physical environment. For example, hub 2450 may be configured to detect peripheral devices 2430(1-n). The detecting may include determining a presence of a peripheral device via sensor (*e.g,* vision-based detection), communication (*e.g.,* Bluetooth^{®}, IR), or other suitable method of determining a presence of a peripheral device, as would be appreciated by one of ordinary skill in the art with the benefit of this disclosure.

At step 2520, method 2500 can include determining a location of the physical peripheral device within the physical environment. This can be performed, *e.g*., by hub 2450 using the sensor capabilities described above with respect to FIG. 24 and identified as an independent second tracking system to track peripherals and provide location data, peripheral function data, peripheral visual representation data, and the like.

At step 2530, method 2500 can include establishing a communicative coupling with, and receiving data from, the physical peripheral device and an AR/VR-based display. That is, hub 2450 can interact (*e.g*., communicate with, transfer data to/from, share sensor/tracking data, etc.) with each of peripheral devices(1-n) using separate communication links (*e.g*., Bluetooth^{®}, Wi-Fi, IR, ZigBee, Z-Wave, RF, etc.) and coalesce information from peripheral devices 2430 to display system 2420 *(e.g.,* HMD, holographic imaging system, AR/VR display system, etc.) using a single communication pathway via hub 2450 to facilitate a transfer of received data between the physical peripheral device and the AR/VR-based display (step 2540).

At step 2550, method 2500 can include determining an area to orient a virtual display relative to the physical peripheral device within the physical environment based on the determined location of the physical peripheral device. In some cases, the determine areas may correspond to the "zones" described above with respect to FIGS. 18-23.

At step 2560, method 2500 can include hub 2450 generating control data configured to cause the AR/VR-based display to project the virtual display in the determined area (*e.g.,* zone 1, 2, 3, 4, etc.). In some cases, the control data may be further configured to cause the AR/VR-based display to maintain a spatial relationship between the physical peripheral device and the projected virtual display as the physical peripheral device is moved within the physical environment.

Method 2500 can further include receiving polling data from one or more sensors, where the polling data corresponds to physical characteristics of a physical environment around the physical peripheral device, and where determining the area to orient the virtual display can be further based on the physical characteristics of the physical environment. In some cases, a movement and location of a head-mounted display (HMD) of the AR/VR-based display and the hub can be tracked using a first tracking system, and the determining a location of the physical peripheral device within the physical environment can be tracked via the hub using a second tracking system, such that method 2500 may further include providing data corresponding to the determined location of the physical peripheral device within the physical environment to the HMD, where the provided data may be configured to cause the integration of tracking via the second tracking system with tracking via the first tracking system.

In some embodiments, method 2500 may further include detecting a second physical peripheral device within the physical environment, determining a location of the second physical peripheral device within the physical environment, establishing a communicative coupling with, and receiving data from the second physical peripheral device, and coalescing the received data from the first and second physical peripheral devices into aggregate peripheral data, where the aggregate peripheral data may be transferred to the AR/VR-based display via the hub instead of the individual received data from each of the first and second physical peripheral devices. In some embodiments, the hub may be a standalone unit or can be integrated with one of a keyboard, smart device, wearable device, or mini-tower device, or the like.

It should be appreciated that the specific steps illustrated in FIG. 25 provide a particular method 2500 for operating a hub to interact with one or more peripheral devices within an AR/VR workstation environment, according to certain embodiments. Other sequences of steps may also be performed according to alternative embodiments. Furthermore, additional steps may be added or removed depending on the particular applications. Any combination of changes can be used and one of ordinary skill in the art with the benefit of this disclosure would understand the many variations, modifications, and alternative embodiments thereof.

It will be appreciated that any of the disclosed methods (or corresponding apparatuses, programs, data carriers, etc.) may be carried out by either a host or client, depending on the specific implementation (i.e. the disclosed methods/apparatuses are a form of communication(s), and as such, may be carried out from either 'point of view', *i.e.,* in corresponding to each other fashion).

As used in this specification, any formulation used of the style "at least one of A, B or C", and the formulation "at least one of A, B and C" use a disjunctive "or" and a disjunctive "and" such that those formulations comprise any and all joint and several permutations of A, B, C, that is, A alone, B alone, C alone, A and B in any order, A and C in any order, B and C in any order and A, B, C in any order. There may be more or less than three features used in such formulations.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

Unless otherwise explicitly stated as incompatible, or the physics or otherwise of the embodiments, example or claims prevent such a combination, the features of the foregoing embodiments and examples, and of the following claims may be integrated together in any suitable arrangement, especially ones where there is a beneficial effect in doing so. This is not limited to only any specified benefit, and instead may arise from an "ex post facto" benefit. This is to say that the combination of features is not limited by the described forms, particularly the form (e.g. numbering) of the example(s), embodiment(s), or dependency of the claim(s). Moreover, this also applies to the phrase "in one embodiment", "according to an embodiment" and the like, which are merely a stylistic form of wording and are not to be construed as limiting the following features to a separate embodiment to all other instances of the same or similar wording. This is to say, a reference to 'an', "one" or 'some' embodiment(s) may be a reference to any one or more, and/or all embodiments, or combination(s) thereof, disclosed. Also, similarly, the reference to "the" embodiment may not be limited to the immediately preceding embodiment.

Certain figures in this specification are flow charts illustrating methods and systems. It will be understood that each block of these flow charts, and combinations of blocks in these flow charts, may be implemented by computer program instructions. These computer program instructions may be loaded onto a computer or other programmable apparatus to produce a machine, such that the instructions which execute on the computer or other programmable apparatus create structures for implementing the functions specified in the flow chart block or blocks. These computer program instructions may also be stored in a computer-readable memory that can direct a computer or other programmable apparatus to function in a particular manner, such that the instructions stored in the computer-readable memory produce an article of manufacture including instruction structures which implement the function specified in the flow chart block or blocks. The computer program instructions may also be loaded onto a computer or other programmable apparatus to cause a series of operational steps to be performed on the computer or other programmable apparatus to produce a computer implemented process such that the instructions which execute on the computer or other programmable apparatus provide steps for implementing the functions specified in the flow chart block or blocks. Accordingly, blocks of the flow charts support combinations of structures for performing the specified functions and combinations of steps for performing the specified functions. It will also be understood that each block of the flow charts, and combinations of blocks in the flow charts, can be implemented by special purpose hardware-based computer systems which perform the specified functions or steps, or combinations of special purpose hardware and computer instructions.

For example, any number of computer programming languages, such as C, C++, C# (CSharp), Perl, Ada, Python, Pascal, SmallTalk, FORTRAN, assembly language, and the like, may be used to implement machine instructions. Further, various programming approaches such as procedural, object-oriented or artificial intelligence techniques may be employed, depending on the requirements of each particular implementation. Compiler programs and/or virtual machine programs executed by computer systems generally translate higher level programming languages to generate sets of machine instructions that may be executed by one or more processors to perform a programmed function or set of function.

## Claims

1. A method performed by a hub (2450) to interact with one or more physical peripheral devices (2430) within an AR/VR workstation environment, the method comprising:
detecting a first physical peripheral device (2430) within a physical environment (2510);
determining a location of the first physical peripheral device (2430) within the physical environment (2520);
establishing a communicative coupling with, and receiving data from, the first physical peripheral device (2430) and an AR/VR-based display (2420, 2530); facilitating a transfer of received data between the first physical peripheral device (2430) and the AR/VR-based display (2540);
determining an area to orient a virtual display relative to the first physical peripheral device (2430) within the physical environment based on the determined location of the first physical peripheral device (2430, 2550);
generating control data configured to cause the AR/VR-based display to project the virtual display in the determined area (2560),
**characterized in that** the AR/VR-based display and the hub are each configured to track their own location using a first tracking system,
wherein the determining a location of the first physical peripheral device within the physical environment (2520) is tracked via the hub using a second tracking system; and the method is further **characterized by** providing data corresponding to the determined location of the first physical peripheral device within the physical environment to the AR/VR-based display, based on an integration of tracking via the second tracking system with tracking via the first tracking system.

2. The method of claim 1 wherein the control data is further configured to cause the AR/VR-based display to maintain a spatial relationship between the first physical peripheral device (2430) and the projected virtual display as the first physical peripheral device (2430) is moved within the physical environment.

3. The method of claim 1 further comprising:
receiving polling data from one or more sensors, the polling data corresponding to physical characteristics of a physical environment around the first physical peripheral device (2430, 2310),
wherein determining the area to orient the virtual display (2550) is further based on the physical characteristics of the physical environment.

4. The method of claim 1 further comprising:
detecting a second physical peripheral device (2430) within the physical environment;
determining a location of the second physical peripheral device (2430) within the physical environment;
establishing a communicative coupling with, and receiving data from the second physical peripheral device (2430); and
coalescing the received data from the first and second physical peripheral devices (2430) into aggregate peripheral data,
wherein the aggregate peripheral data is transferred to the AR/VR-based display via the hub (2450) instead of the received data from each of the first and second physical peripheral devices (2430).

5. A system comprising:
one or more processors;
one or more non-transitory computer-readable storage mediums containing instructions configured to cause the one or more processors to perform operations including:
detecting a first physical peripheral device (2430) within a physical environment (2510);
determining a location of the first physical peripheral device (2430) within the physical environment (2520);
establishing a communicative coupling with, and receiving data from, the first physical peripheral device (2430) and an AR/VR-based display (2530);
facilitating a transfer of received data between the first physical peripheral device (2430) and the AR/VR-based display (2540);
determining an area to orient a virtual display relative to the first physical peripheral device (2430) within the physical environment based on the determined location of the first physical peripheral device (2430, 2550); and
generating control data configured to cause the AR/VR-based display to project the virtual display in the determined area (2560),
**characterized in that**
the AR/VR-based display and the hub are each configured to track their own location using a first tracking system,
wherein the determining a location of the first physical peripheral device within the physical environment (2520) is tracked via the hub using a second tracking system; and
providing data corresponding to the determined location of the first physical peripheral device within the physical environment to the AR/VR-based display, the provided data configured to cause an integration of tracking via the second tracking system with tracking via the first tracking system.

6. The system of claim 5 wherein the one or more non-transitory computer-readable storage mediums further contain instructions configured to cause the one or more processors to perform operations including:
receiving polling data from one or more sensors, the polling data corresponding to physical characteristics of a physical environment around the first physical peripheral device (2430, 2310),
wherein determining the area to orient the virtual display (2550) is further based on the physical characteristics of the physical environment.

7. The system of claim 5 wherein the one or more non-transitory computer-readable storage mediums further contain instructions configured to cause the one or more processors to perform operations including:
detecting a second physical peripheral device (2430) within the physical environment;
determining a location of the second physical peripheral device (2430) within the physical environment;
establishing a communicative coupling with, and receiving data from the second physical peripheral device (2430); and
coalescing the received data from the first and second physical peripheral devices (2430) into aggregate peripheral data,
wherein the aggregate peripheral data is transferred to the AR/VR-based display via the hub (2450) instead of the received data from each of the first and second physical peripheral devices (2430).

## Patentansprüche

1. Verfahren, welches von einem Netzknoten (2450) zur Interaktion mit einem oder mehreren physischen Peripheriegeräten (2430) innerhalb einer AR/VR-Arbeitsplatzumgebung durchgeführt wird, wobei das Verfahren umfasst:
Detektieren eines ersten physischen Peripheriegeräts (2430) innerhalb einer physischen Umgebung (2510);
Bestimmen eines Standorts des ersten physischen Peripheriegeräts (2430) innerhalb der physischen Umgebung (2520);
Herstellen einer Kommunikationsverbindung mit, und Empfangen von Daten von, dem ersten physischen Peripheriegerät (2430) und einem AR/VR-basierten Display (2420, 2530);
Ermöglichen einer Übertragung empfangener Daten zwischen dem ersten physischen Peripheriegerät (2430) und dem AR/VR-basierten Display (2540);
Bestimmen eines Bereichs zum Ausrichten eines virtuellen Displays relativ zu dem ersten physischen Peripheriegerät (2430) innerhalb der physischen Umgebung basierend auf dem bestimmten Standort des ersten physischen Peripheriegeräts (2430, 2550);
Erzeugen von Steuerungsdaten, die dazu eingerichtet sind, das AR/VR-basierte Display dazu zu veranlassen, das virtuelle Display in dem bestimmten Bereich (2560) zu projizieren,
**dadurch gekennzeichnet, dass**
das AR/VR-basierte Display und der Netzknoten jeweils dazu eingerichtet sind, ihren eigenen Standpunkt unter Verwendung eines ersten Trackingsystems zu tracken,
wobei das Bestimmen eines Standorts des ersten physischen Peripheriegeräts innerhalb der physischen Umgebung (2520) über den Netzknoten unter Verwendung eines zweiten Trackingsystems getrackt wird; und das Verfahren weiter **gekennzeichnet ist durch** Bereitstellen von Daten an das AR/VR-basierte Display, die dem bestimmten Standort des ersten physischen Peripheriegeräts innerhalb der physischen Umgebung entsprechen, basierend auf einer Integration des Trackings über das zweite Trackingsystem mit dem Tracking über das erste Trackingsystem.

2. Verfahren nach Anspruch 1, wobei die Steuerungsdaten weiter dazu eingerichtet sind, das AR/VR-basierte Display dazu zu veranlassen, eine räumliche Beziehung zwischen dem ersten physischen Peripheriegerät (2430) und dem projizierten virtuellen Display aufrechtzuerhalten, während das erste physische Peripheriegerät (2430) innerhalb der physischen Umgebung bewegt wird.

3. Verfahren nach Anspruch 1, weiter umfassend:
Empfangen von Polling-Daten von einem oder mehreren Sensoren, wobei die Polling-Daten physischen Charakteristika einer physischen Umgebung um das erste physische Peripheriegerät (2430, 2310) entsprechen,
wobei das Bestimmen des Bereichs zum Ausrichten des virtuellen Displays (2550) weiter auf den physischen Charakteristika der physischen Umgebung basiert.

4. Verfahren von Anspruch 1, weiter umfassend:
Detektieren eines zweiten physischen Peripheriegeräts (2430) innerhalb der physischen Umgebung;
Bestimmen eines Standorts des zweiten physischen Peripheriegeräts (2430) innerhalb der physischen Umgebung;
Herstellen einer Kommunikationsverbindung mit, und Empfangen von Daten von dem zweiten physischen Peripheriegerät (2430); und
Verschmelzen der empfangenen Daten von den ersten und zweiten physischen Peripheriegeräten (2430) zu Gesamtperipheriedaten,
wobei die Gesamtperipheriedaten an das AR/VR-basierte Display über den Netzknoten (2450) statt der empfangenen Daten von jedem der ersten und zweiten physischen Peripheriegeräte (2430) übertragen werden.

5. System, aufweisend:
einen oder mehrere Prozessoren;
einen oder mehrere nicht-flüchtige computerlesbare Speichermedien, welche Befehle beinhalten, die dazu eingerichtet sind, den einen oder die mehrere Prozessoren dazu zu veranlassen, Operationen durchzuführen, welche einschließen:
Detektieren eines ersten physischen Peripheriegeräts (2430) innerhalb einer physischen Umgebung (2510);
Bestimmen eines Standorts des ersten physischen Peripheriegeräts (2430) innerhalb der physischen Umgebung (2520);
Herstellen einer Kommunikationsverbindung mit, und Empfangen von Daten von dem ersten physischen Peripheriegerät (2430) und einem AR/VR-basierten Display (2530);
Ermöglichen einer Übertragung von empfangenen Daten zwischen dem ersten physischen Peripheriegerät (2430) und dem AR/VR-basierten Display (2540);
Bestimmen eines Bereichs zum Ausrichten eines virtuellen Displays relativ zu dem ersten physischen Peripheriegerät (2430) innerhalb der physischen Umgebung basierend auf dem bestimmten Standort des ersten physischen Peripheriegeräts (2430, 2550); und
Erzeugen von Steuerungsdaten, die dazu eingerichtet sind, das AR/VR-basierte Display dazu zu veranlassen, das virtuelle Display in dem bestimmten Bereich (2560) zu projizieren,
**dadurch gekennzeichnet, dass**
das AR/VR-basierte Display und der Netzknoten jeweils dazu eingerichtet sind, ihren eigenen Standort unter Verwendung eines ersten Trackingsystems zu tracken,
wobei das Bestimmen eines Standorts des ersten physischen Peripheriegeräts innerhalb der physischen Umgebung (2520) über den Netzknoten unter Verwendung eines zweiten Trackingsystems getrackt wird; und
Bereitstellen von Daten, die dem bestimmten Standort des ersten physischen Peripheriegeräts innerhalb der physischen Umgebung an das AR/VR-basierte Display entsprechen, wobei die bereitgestellten Daten dazu eingerichtet sind, eine Integration des Trackings über das zweite Trackingsystem mit dem Tracking über das erste Trackingsystem zu veranlassen.

6. Das System von Anspruch 5, wobei das eine oder die mehreren nicht-flüchtigen computerlesbaren Speichermedien weiter Befehle beinhalten, die dazu eingerichtet sind, den einen oder die mehreren Prozessoren dazu zu veranlassen, Operationen durchzuführen, welche einschließen:
Empfangen von Polling-Daten von einem oder mehreren Sensoren, wobei die Polling-Daten physischen Charakteristika einer physischen Umgebung um das erste physische Peripheriegerät (2430, 2310) entsprechen,
wobei das Bestimmen des Bereichs zum Ausrichten des virtuellen Displays (2550) weiter auf den physikalischen Charakteristika der physischen Umgebung basiert.

7. System von Anspruch 5, wobei das eine oder die mehreren nicht-flüchtigen computerlesbaren Speichermedien weiter Befehle beinhalten, die dazu eingerichtet sind, den einen oder die mehreren Prozessoren dazu zu veranlassen, Operationen durchzuführen, welche einschließen:
Detektieren eines zweiten physischen Peripheriegeräts (2430) innerhalb der physischen Umgebung;
Bestimmen eines Standorts des zweiten physischen Peripheriegeräts (2430) innerhalb der physischen Umgebung;
Herstellen einer Kommunikationsverbindung mit, und Empfangen von Daten von dem zweiten physischen Peripheriegerät (2430); und
Verschmelzen der empfangenen Daten von den ersten und zweiten physischen Peripheriegeräten (2430) zu Gesamtperipheriedaten,
wobei die Gesamtperipheriedaten an das AR/VR-basierte Display über den Netzknoten (2450) statt der empfangenen Daten von jedem der ersten und zweiten physischen Peripheriegeräte (2430) übertragen werden.

## Revendications

1. Procédé mis en œuvre par un concentrateur (2450) pour interagir avec un ou plusieurs dispositifs périphériques physiques (2430) dans un environnement de station de travail de Réalité Augmentée/Réalité Virtuelle, RA/RV, le procédé comportant :
détecter un premier dispositif périphérique physique (2430) dans un environnement physique (2510) ;
déterminer un emplacement du premier dispositif périphérique physique (2430) au sein de l'environnement physique (2520) ;
établir un couplage de communication avec le premier dispositif périphérique physique (2430) et un affichage basé sur la RA/RV (2420, 2530) et recevoir des données provenant de ceux-ci ;
faciliter un transfert de données reçues entre le premier dispositif périphérique physique (2430) et l'affichage basé sur la RA/RV (2540) ;
déterminer une zone pour orienter un affichage virtuel par rapport au premier dispositif périphérique physique (2430) dans l'environnement physique sur la base de l'emplacement déterminé du premier dispositif périphérique physique (2430, 2550) ;
générer des données de commande configurées pour amener l'affichage basé sur la RA/RV à projeter l'affichage virtuel dans la zone déterminée (2560),
**caractérisé en ce que**
l'affichage basé sur la RA/RV et le concentrateur sont chacun configurés pour suivre leur propre emplacement en utilisant un premier système de suivi,
la détermination d'un emplacement du premier dispositif périphérique physique dans l'environnement physique (2520) étant suivie via le concentrateur en utilisant un second système de suivi ; et le procédé est en outre **caractérisé par** :
fournir à l'affichage basé sur la RA/RV des données correspondant à l'emplacement déterminé du premier dispositif périphérique physique dans l'environnement physique, sur la base d'une intégration de suivi via le second système de suivi avec un suivi via le premier système de suivi.

2. Procédé selon la revendication 1, dans lequel les données de commande sont en outre configurées pour amener l'affichage basé sur la RA/RV à maintenir une relation spatiale entre le premier dispositif périphérique physique (2430) et l'affichage virtuel projeté pendant que le premier dispositif périphérique physique (2430) est déplacé dans l'environnement physique.

3. Procédé selon la revendication 1, comportant en outre :
recevoir des données d'interrogation provenant d'un ou de plusieurs capteurs, les données d'interrogation correspondant à des caractéristiques physiques d'un environnement physique autour du premier dispositif périphérique physique (2430, 2310),
la détermination de la zone pour orienter l'affichage virtuel (2550) étant en outre basée sur les caractéristiques physiques de l'environnement physique.

4. Procédé selon la revendication 1, comportant en outre :
détecter un second dispositif périphérique physique (2430) dans l'environnement physique ;
déterminer un emplacement du second dispositif périphérique physique (2430) dans l'environnement physique ;
établir un couplage de communication avec le second dispositif périphérique physique (2430) et recevoir des données provenant de celui-ci ; et
fusionner les données reçues des premier et second dispositifs périphériques physiques (2430) en données périphériques agrégées,
les données périphériques agrégées étant transférées vers l'affichage basé sur la RA/RV via le concentrateur (2450) à la place des données reçues de chacun des premier et second dispositifs périphériques physiques (2430).

5. Système comportant :
un ou plusieurs processeurs ;
un ou plusieurs supports de stockage non transitoires lisibles par ordinateur contenant des instructions configurées pour amener le ou les processeurs à exécuter des opérations comprenant :
détecter un premier dispositif périphérique physique (2430) dans un environnement physique (2510) ;
déterminer un emplacement du premier dispositif périphérique physique (2430) dans l'environnement physique (2520) ;
établir un couplage de communication avec le premier dispositif périphérique physique (2430) et un affichage basé sur la RA/RV (2530) et recevoir des données provenant de ceux-ci ;
faciliter un transfert de données reçues entre le premier dispositif périphérique physique (2430) et l'affichage basé sur la RA/RV (2540) ;
déterminer une zone pour orienter un affichage virtuel par rapport au premier dispositif périphérique physique (2430) dans l'environnement physique sur la base de l'emplacement déterminé du premier dispositif périphérique physique (2430, 2550) ; et
générer des données de commande configurées pour amener l'affichage basé sur la RA/RV à projeter l'affichage virtuel dans la zone déterminée (2560),
**caractérisé en ce que**
l'affichage basé sur la RA/RV et le concentrateur sont chacun configurés pour suivre leur propre emplacement en utilisant un premier système de suivi,
la détermination d'un emplacement du premier dispositif périphérique physique dans l'environnement physique (2520) étant suivie via le concentrateur en utilisant un second système de suivi ; et
fournir à l'affichage basé sur la RA/RV des données correspondant à l'emplacement déterminé du premier dispositif périphérique physique dans l'environnement physique, les données fournies étant configurées pour entraîner une intégration de suivi via le second système de suivi avec un suivi via le premier système de suivi.

6. Système selon la revendication 5, dans lequel le ou les supports de stockage non transitoires lisibles par ordinateur contiennent en outre des instructions configurées pour amener le ou les processeurs à exécuter des opérations comprenant :
recevoir des données d'interrogation provenant d'un ou de plusieurs capteurs, les données d'interrogation correspondant à des caractéristiques physiques d'un environnement physique autour du premier dispositif périphérique physique (2430, 2310),
la détermination de la zone pour orienter l'affichage virtuel (2550) étant en outre basée sur les caractéristiques physiques de l'environnement physique.

7. Système selon la revendication 5, dans lequel le ou les supports de stockage non transitoires lisibles par ordinateur contiennent en outre des instructions configurées pour amener le ou les processeurs à exécuter des opérations comprenant :
détecter un second dispositif périphérique physique (2430) dans l'environnement physique ;
déterminer un emplacement du second dispositif périphérique physique (2430) dans l'environnement physique ;
établir un couplage de communication avec le second dispositif périphérique physique (2430) et recevoir des données provenant de celui-ci ; et
fusionner les données reçues des premier et second dispositifs périphériques physiques (2430) en données périphériques agrégées,
les données périphériques agrégées étant transférées vers l'affichage basé sur la RA/RV via le concentrateur (2450) à la place des données reçues de chacun des premier et second dispositifs périphériques physiques (2430).
